# EUROPEAN PATENT APPLICATION

(11) **EP 4 436 007 A1**
(43) Date of publication of application: **25.09.2024**
(21) Application number: 22895705.6
(22) Date of filing: 18.11.2022
(51) Int. Cl.: H02K 1/02, C21D 8/12, C22C 38/00, H01F 1/147

(54) **ROTARY ELECTRIC MACHINE, NON-ORIENTED ELECTRICAL STEEL SHEET, LAMINATED CORE, METHOD FOR MANUFACTURING ROTARY ELECTRIC MACHINE, AND METHOD FOR MANUFACTURING LAMINATED CORE**

(30) Priority: 18.11.2021 JP 2021187952
(71) Applicant: NIPPON STEEL CORPORATION, Chiyoda-ku Tokyo 100-8071 (JP)
(72) Inventor: MURAKAWA, Tesshu, Tokyo 100-8071 (JP); KANO, Satoshi, Tokyo 100-8071 (JP)
(74) Representative: Vossius & Partner Patentanwälte Rechtsanwälte mbB
(86) International application number: PCT/JP2022/042866
(87) International publication number: WO 2023/090424

(57) **Abstract**

This rotary electric machine includes a stator, a rotor, and a housing that houses the stator and the rotor, A which is an {111} <211> orientation strength of a base steel sheet of a non-oriented electrical steel sheet included in the stator is less than 15, B which is an { 111 } <211> orientation strength of a base steel sheet of the non-oriented electrical steel sheet included in the rotor is 2 to 30, the A and the B satisfy a relationship of B/A > 1.0, C which is an {411} <011> orientation strength of a base steel sheet of the non-oriented electrical steel sheet included in the stator is 2 to 50, D which is an {411} <011> orientation strength of a base steel sheet of the non-oriented electrical steel sheet included in the rotor is 1 to 40, and the C and D satisfy a relationship of C/D > 1.0.

## Description

### [Technical Field of the Invention]

The present invention relates to a rotary electric machine, a non-oriented electrical steel sheet, a laminated core, a method for manufacturing a rotary electric machine, and a method for manufacturing a laminated core.

The present application claims priority based on Japanese Patent Application No. 2021-187952 filed in Japan on November 18, 2021, the contents of which are incorporated herein by reference.

### [Related Art]

In the present specification, a non-oriented electrical steel sheet before lamination constituting a stator core may be referred to as a core material of a stator, a non-oriented electrical steel sheet before lamination constituting a rotor core may be referred to as a core material of a rotor, and a combination of the stator core and the rotor core may be referred to as a motor core.

An electrical steel sheet, particularly a non-oriented electrical steel sheet, is used as a core material of a rotary electric machine. For example, a rotary electric machine is used as a drive motor mounted on a hybrid vehicle, a fuel cell vehicle, an electric vehicle, or the like. Both noise reduction and high torque are required for future automobile driving motors. The noise of the motor is mainly generated by non-uniform magnetic attraction force. In addition, when a gap between the stator and the rotor becomes non-uniform due to eccentricity of the rotor or the like, the magnetic attraction force also becomes non-uniform, which causes an increase in motor noise.

Patent Document 1 proposes a non-oriented electrical steel sheet having small magnetic anisotropy and high magnetic flux density, which is effective for improving efficiency in an actual machine motor and reducing noise during rotation. In the motor, a magnetic flux flows through the air gap between the stator portion and the rotor portion, and this magnetic flux interaction generates torque in the rotor. The stronger the anisotropy of the electrical steel sheet as the stator material, that is, the larger the difference in magnetic characteristics in the in-plane direction, the larger the difference in torque at the rotational position of the rotor. It is described that the variation in torque during rotation causes rotation unevenness and affects noise.

### [Citation List]

### [Patent Document]

[Patent Document 1]
Japanese Unexamined Patent Application, First Publication No. 2001-49402

### [Summary of Invention]

### [Problems to be Solved by the Invention]

An object of the present invention is to provide a rotary electric machine that realizes both noise reduction and high torque required for an automobile driving motor, a non-oriented electrical steel sheet suitable as a material of a rotor and a stator of such a rotary electric machine, a laminated core formed by laminating non-oriented electrical steel sheets suitably used for a stator or a rotor of a rotary electric machine, and a method for manufacturing thereof.

### [Means for Solving the Problem]

The noise of the motor is mainly generated by non-uniform magnetic attraction force between the stator and the rotor. When the gap between the stator and the rotor becomes non-uniform due to eccentricity of the rotor or the like, the magnetic attraction force also becomes non-uniform, which causes an increase in noise.

In the { 111} <uvw> orientation of the non-oriented electrical steel sheet, it has been found that anisotropy of Young's modulus in the in-plane direction (proportional coefficient of elongation and stress in elastic deformation region) is small.

Based on this finding, the present inventors have further conducted studies, and resultantly found that when an electrical steel sheet (non-oriented electrical steel sheet) in which the { 111 } <211> orientation is enriched is used as a core material of a rotor of a permanent magnet (PM) motor, anisotropy of elongation deformation of the steel sheet of the core material of the rotor with respect to centrifugal force during rotation of the rotor is suppressed, and noise can be reduced. In general, since the {111} <211> orientation is difficult to magnetize, use as a core material of a motor is avoided, but for the core material of the rotor of the PM motor in which magnetization is secured by a permanent magnet, application of the electrical steel sheet in which the { 111} <211> orientation is enriched is not a great disadvantage.

On the other hand, it is disadvantageous to use the electrical steel sheet in which the { 111} <211> orientation is enriched as a core material of a stator in which magnetization that generates motor torque is secured by magnetization of the core material. Therefore, the present inventors have found that by using an electrical steel sheet (non-oriented electrical steel sheet) enriched in the {411} <011> orientation having excellent magnetic characteristics for the core material of the stator and using electrical steel sheets enriched in different orientations for the core material of the rotor and the core material of the stator, both noise reduction and high torque can be achieved in a rotary electric machine obtained using these electrical steel sheets as materials.

Here, {lmn} <uvw> represents the orientation of a crystal. {lmn} refers to the Miller indices in the direction parallel to the normal direction of the rolled surface, and <uvw> refers to the Miller indices in the direction parallel to the rolling direction in the electrical steel sheet production step. In addition, since the present invention controls the rotational torque variation caused by the in-plane anisotropy of the characteristics of the electrical steel sheet, the present invention also defines the integrated orientation strength in the rolling direction.

In order to solve the above problem, the present invention has the following configuration.
[1] A rotary electric machine according to an aspect of the present invention includes a stator; a rotor; and a housing that houses the stator and the rotor, wherein A which is an { 111} <211> orientation strength of a base steel sheet of a non-oriented electrical steel sheet included in the stator is less than 15, B which is an { 111 } <211> orientation strength of a base steel sheet of a non-oriented electrical steel sheet included in the rotor is 2 to 30, and the A and the B satisfy a relationship of B/A > 1.0, C which is an {411} <011> orientation strength of the base steel sheet of the non-oriented electrical steel sheet included in the stator is 2 to 50, D which is an {411} <011> orientation strength of the base steel sheet of the non-oriented electrical steel sheet included in the rotor is 1 to 40, and the C and the D satisfy a relationship of C/D > 1.0, and the base steel sheets of the non-oriented electrical steel sheet included in the rotor and the non-oriented electrical steel sheet included in the stator each having a chemical composition including, in mass%, C: 0.0100% or less, Si: 0.5000 to 4.0000%, sol.Al: 0.0001 to 1.0000%, S: 0.0100% or less, N: 0.0100% or less, one or more selected from the group consisting of Mn, Ni, Co, Pt, Pb, Cu, and Au: 0.1000 to 5.0000% in total, Cr: 0 to 2.0000%, Sn: 0 to 0.4000%, Sb: 0 to 0.4000%, P: 0 to 0.4000%, Ti: 0 to 0.1000%, Nb: 0 to 0.1000%, Zr: 0 to 0.1000%, V: 0 to 0.1000%, and the remainder of Fe and impurities.
[2] In the rotary electric machine according to the above [1], in which, in the non-oriented electrical steel sheet included in the rotor, the B and E which is an {111} <011> orientation strength may satisfy a relationship of B/E > 1.0.
[3] In the rotary electric machine according to the above [1] or [2], in which, in the non-oriented electrical steel sheet included in the stator, the C and F which is an 100 1 <011> orientation strength may satisfy a relationship of C/F > 1.0.
[4] In the rotary electric machine according to any one of the above [1] to [3], in which difference in a total of the Si content, the Mn content, and the sol.Al content in the base steel sheets between the non-oriented electrical steel sheet included in the stator and the non-oriented electrical steel sheet included in the rotor may be within 0.20 mass%, and an average grain size of the non-oriented electrical steel sheet included in the stator may be larger than an average grain size of the non-oriented electrical steel sheet included in the rotor.
[5] In the rotary electric machine according to any one of the above [1] to [4], in which when the Si content, the Ti content, and the Nb content in mass% of the base steel sheet of the non-oriented electrical steel sheet included in the stator are respectively denoted by Siₛ, Tiₛ, and Nbₛ, and the Si content, the Ti content, and the Nb content of the base steel sheet of the non-oriented electrical steel sheet included in the rotor are respectively denoted by Siᵣ, Tiᵣ, and Nbr, any one of Siₛ/Siᵣ > 1.0, Tiᵣ/Tiₛ > 1.0, and Nbᵣ/Nbₛ > 1.0 may be satisfied.
[6] In the rotary electric machine according to any one of the above [1] to [5], in which when the Nb content, the Zr content, the Ti content, the V content, the C content, and the N content in mass% of the base steel sheet of the non-oriented electrical steel sheet included in the stator are respectively denoted by Nbₛ, Zrₛ, Tiₛ, Vₛ, Cₛ, and Nₛ, 0 > Nbₛ/93 + Zrₛ/91 + Tiₛ/48 + Vₛ/51 - (Cₛ/12 + Nₛ/14) may be satisfied.
[7] In the rotary electric machine according to any one of the above [1] to [6], in which when the Nb content, the Zr content, the Ti content, the V content, the C content, and the N content of the base steel sheet of the non-oriented electrical steel sheet included in the rotor are respectively denoted by Nbr, Zrr, Tiᵣ, Vᵣ, Cᵣ, and Nr, in mass%,0 < Nbᵣ/93 + Zrᵣ/91 + Tiᵣ/48 + Vᵣ/51 - (Cᵣ/12 + Nᵣ/14) < 5.0 × 10⁻³ may be satisfied.
[8] A non-oriented electrical steel sheet according to another aspect of the present invention includes a base steel sheet; and an insulating coating formed on a surface of the base steel sheet, the base steel sheet having a chemical composition including, in mass%, C: 0.0100% or less, Si: 0.5000 to 4.0000%, sol.Al: 0.0001 to 1.0000%, S: 0.0100% or less, N: 0.0100% or less, one or more selected from the group consisting of Mn, Ni, Co, Pt, Pb, Cu, and Au: 0.1000 to 5.0000% in total, Cr: 0 to 2.0000%, Sn: 0 to 0.4000%, Sb: 0 to 0.4000%, P: 0 to 0.4000%, Ti: 0 to 0.1000%, Nb: 0 to 0.1000%, Zr: 0 to 0.1000%, V: 0 to 0.1000%, and the remainder of Fe and impurities, and in the base steel sheet, an {111} <211> orientation strength being less than 15, and an {411} <011> orientation strength being 2 to 50.
[9] A non-oriented electrical steel sheet according to another aspect of the present invention includes a base steel sheet; and an insulating coating formed on a surface of the base steel sheet, the base steel sheet having a chemical composition including, in mass%, C: 0.0100% or less, Si: 0.5000 to 4.0000%, sol.Al: 0.0001 to 1.0000%, S: 0.0100% or less, N: 0.0100% or less, one or more selected from the group consisting of Mn, Ni, Co, Pt, Pb, Cu, and Au: 0.1000 to 5.0000% in total, Cr: 0 to 2.0000%, Sn: 0 to 0.4000%, Sb: 0 to 0.4000%, P: 0 to 0.4000%, Ti: 0 to 0.1000%, Nb: 0 to 0.1000%, Zr: 0 to 0.1000%, V: 0 to 0.1000%, and the remainder of Fe and impurities, and in the base steel sheet, an { 111} <211> orientation strength being 2 to 30, and an {411} <011> orientation strength being 1 to 40.
[10] A laminated core according to another aspect of the present invention in which the non-oriented electrical steel sheets according to the above [8] are laminated.
[11] A laminated core according to another aspect of the present invention in which the non-oriented electrical steel sheets according to the above [9] are laminated.
[12] In the rotary electric machine according to any one of the above [1] to [7], in which the non-oriented electrical steel sheet included in the stator may be a steel sheet obtained by further performing heat treatment at 600°C or higher on the non-oriented electrical steel sheet included in the rotor.
[13] A method for manufacturing a laminated core according to another aspect of the present invention includes a step of processing and laminating the non-oriented electrical steel sheets according to the above [8].
[14] A method for manufacturing a laminated core according to another aspect of the present invention includes a step of processing and laminating the non-oriented electrical steel sheets according to the above [9].
[15] A method for manufacturing a rotary electric machine according to another aspect of the present invention includes a step of assembling the laminated core according to the above [10] and the laminated core according to the above [11].

### [Effects of the Invention]

According to the above aspects of the present invention, it is possible to provide a rotary electric machine that realizes both noise reduction and high torque required for automobile driving motors, a non-oriented electrical steel sheet suitable as a material of a rotor and a stator of such a rotary electric machine, a laminated core formed by laminating non-oriented electrical steel sheets suitably used for a stator or a rotor of a rotary electric machine.

That is, in the rotary electric machine according to the above aspects of the present invention, by using an electrical steel sheet enriched in the { 111} <211> orientation as the rotor core material, the anisotropy of Young's modulus in the in-plane direction is reduced, and the anisotropy of deformation of the rotor core material in the radial direction due to the centrifugal force during the rotor rotation is suppressed, so that the gap between the stator and the rotor is made constant, whereby the motor noise can be suppressed. In addition, by using an electrical steel sheet enriched in the {411} <011> orientation as the core material of the stator, torque of the motor can be increased. Therefore, the rotary electric machine according to the above aspects of the present invention can achieve both noise reduction and high torque.

### [Brief Description of the Drawing]

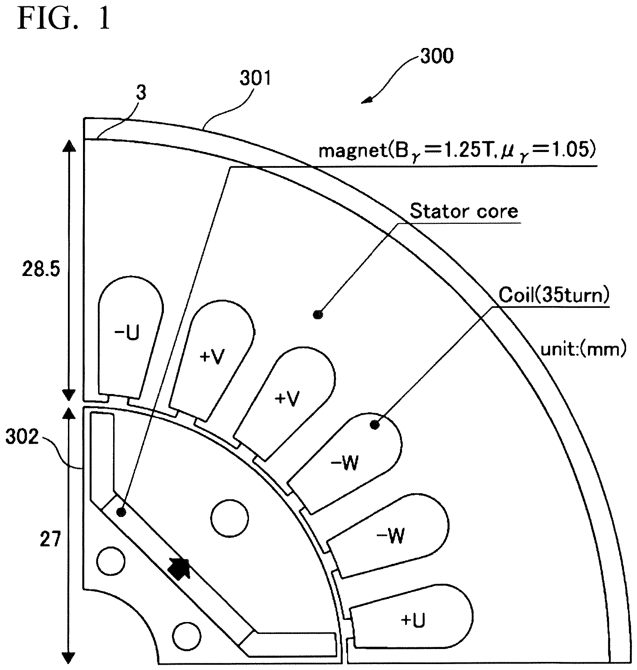

FIG. 1 is a partial plan view of a motor used in Example.

### [Embodiment of the Invention]

Hereinafter, a rotary electric machine according to an embodiment of the present invention (a rotary electric machine according to the present embodiment), a non-oriented electrical steel sheet according to an embodiment of the present invention (a non-oriented electrical steel sheet according to the present embodiment), a laminated core according to an embodiment (a laminated core according to the present embodiment), and a method for manufacturing the same of the present invention will be described.

Unless otherwise specified, expression "a to b" concerning numerical values a and b shall mean "a or more and b or less". In such expression, if a unit is added only to the numerical value b, this unit shall be applied to the numerical value a as well.

### [Rotary electric machine]

### [Non-oriented electrical steel sheet]

The rotary electric machine according to the present embodiment has the following constitutions.

The rotary electric machine according to the present embodiment includes a stator; a rotor; and a housing that houses the stator and the rotor, wherein
A which is an { 111 } <211> orientation strength of a base steel sheet of a non-oriented electrical steel sheet included in the stator is less than 15, B which is an {111} <211> orientation strength of a base steel sheet of a non-oriented electrical steel sheet included in the rotor is 2 to 30, and the A and the B satisfy a relationship of B/A > 1.0,
C which is an {411 } <011> orientation strength of the base steel sheet of the non-oriented electrical steel sheet included in the stator is 2 to 50, D which is an {411 } <011> orientation strength of the base steel sheet of the non-oriented electrical steel sheet included in the rotor is 1 to 40, and the C and the D satisfy a relationship of C/D > 1.0, and
the base steel sheets of the non-oriented electrical steel sheet included in the rotor and the non-oriented electrical steel sheet included in the stator each including
C: 0.0100% or less. Si: 0.5000 to 4.0000%, sol.Al: 0.0001 to 1.0000%, S: 0.0100% or less, N: 0.0100% or less, one or more selected from the group consisting of Mn, Ni, Co, Pt, Pb, Cu, and Au: 0.1000 to 5.0000% in total, in mass%, Cr: 0 to 2.0000%, Sn: 0 to 0.4000%, Sb: 0 to 0.4000%, P: 0 to 0.4000%, Ti: 0 to 0.1000%, Nb: 0 to 0.1000%, Zr: 0 to 0.1000%, V: 0 to 0.1000%, and the remainder having a chemical composition consisting of Fe and impurities.

Among them, the non-oriented electrical steel sheet included in the rotor (that is a rotor core material) and the non-oriented electrical steel sheet included in the stator (that is a stator core material) are each the non-oriented electrical steel sheet according to the present embodiment.

The rotary electric machine according to the present embodiment includes at least a stator, a rotor, and a housing that accommodates the stator and the rotor. The stator, the rotor, and the housing are not particularly limited in terms of their shapes and constitutions, and have normal shapes and constitutions.

### <Non-oriented electrical steel sheet>

The non-oriented electrical steel sheet according to the present embodiment includes a base steel sheet and an insulating coating formed on a surface of the base steel sheet.

Among them, the non-oriented electrical steel sheet according to the present embodiment is particularly characterized in the chemical composition and texture (orientation strength in each orientation) of the base steel sheet.

### [Orientation strength of each orientation of base steel sheet]

The {111} <211> orientation strength of the base steel sheet of the non-oriented electrical steel sheet mainly represents the integrated strength in the { 111 } orientation in which the anisotropy of Young's modulus in the in-plane direction is relatively small. It is considered that ideally, it is preferable to form a completely random texture when considering reduction of anisotropy in the in-plane direction due to crystal orientation. Alternatively, even if it is not completely random, it is considered preferable to strongly integrate in a specific plane orientation and randomly integrate in an in-plane orientation with respect to the plane orientation, for example, to make the integrated strength for v and w uniform in { 100} <0vw>, and to make the change in the integrated strength in the sheet surface small and random even in the { 111} orientation. However, in an electrical steel sheet manufactured through general casting, rolling, and annealing (heat treatment), considerable integration in a specific orientation is inevitable in a base steel sheet, and it is difficult to achieve ideal randomization as described above. In view of such a background, in the non-oriented electrical steel sheet included in the rotor and the stator of the rotary electric machine according to the present embodiment (the non-oriented electrical steel sheet according to the present embodiment), the {111} <211> orientation strength of the base steel sheet is an orientation that should be reliably controlled as intended in a general electrical steel sheet, and is very effective as an index for achieving the suppression of the anisotropy of Young's modulus in the in-plane direction. Furthermore, the { 111} <211> orientation strength is an effective index for evaluating magnetic characteristics of the core material of the stator, and in the present embodiment, this orientation is used as one definition for obtaining an effect.

In addition, the {411} <011> orientation strength of the base steel sheet of the electrical steel sheet indicates that a magnetization easy axis is mainly close to the in-plane direction, and thus the magnetic characteristics are excellent. Here, the magnetization easy axis is a direction in which magnetization is the easiest among the magnetic anisotropy of the crystal, and refers to ridgeline directions ([100], [010], [001] directions) in the crystal having bcc structure. Therefore, in the present embodiment, this orientation is also used as one definition for obtaining an effect.

In the present specification, the orientation strength of the base steel sheet of the electrical steel sheet may be simply expressed as the orientation strength of the electrical steel sheet (non-oriented electrical steel sheet), but even in this case, the orientation strength means the orientation strength of the base steel sheet.

In the present specification, the "orientation strength" indicates how many times the diffraction intensity is when the crystal orientation is random. That is, for example, the { 111} <211> orientation strength indicates how many times the diffraction intensity of the { 111} <211> orientation is higher than that when the crystal orientation is random, when measured by EBSD.

There are various methods for measuring the crystal orientation strength, but in the measurement of the {111} <211> orientation strength and the {411} <011> orientation strength, first, a rolled surface is polished so that the center of the sheet thickness of the base steel sheets of the non-oriented electrical steel sheet that is the core material of the stator and the core material of the rotor appears, and the polished surface is observed in a region of 960,000 µm² or more by electron back scattering diffraction (EBSD). The observation may be performed in a total area of 960,000 µm² or more, for example, in the range of 800 µm × 1,200 µm or more. In a case where the measurement magnification is not within the range, the measurement may be performed at several sites divided into several small partitions, and for example, 8 or more regions of 200 µm × 600 µm or more may be observed.

The step interval at the time of measurement is preferably 1 µm. The upper limit of the step interval is 1/10 of the average grain size.

The { 111} <211> orientation strength and the {411 } <011> orientation strength are obtained from the EBSD observation data.

A procedure for obtaining the { 111} <211> orientation strength and the {411} <011> orientation strength from the EBSD observation data will be described below.

As described above, the range with an area of 960,000 µm² or more is observed, and at least 100 grains are observed.

The observation data is analyzed using OIM Analysis software (manufactured by TSL) to create an orientation distribution function (ODF), and the {111} <211> orientation strength and the {411} <011> orientation strength are obtained from the values.

In the rotary electric machine according to the present embodiment, the {111} <211> orientation strength (A) of the base steel sheet of the non-oriented electrical steel sheet that is the core material of the stator is in the range of less than 15. If the {111} <211> orientation strength (A) exceeds 15, the magnetic characteristics are deteriorated. The range of the { 111 } <211> orientation strength (A) is preferably 1 to 3.

In the rotary electric machine according to the present embodiment, the {111} <211> orientation strength (B) of the base steel sheet of the non-oriented electrical steel sheet that is the core material of the rotor is in the range of 2 to 30. When the {111} <211> orientation strength (B) is less than 2, the in-plane anisotropy of Young's modulus increases, and noise during rotation increases. On the other hand, when the {111} <211> orientation strength (B) exceeds 30, the magnetic permeability becomes small, thus the motor efficiency decreases. The range of the orientation strength (B) is preferably 10 to 30.

In the rotary electric machine according to the present embodiment, in each of the non-oriented electrical steel sheet that is the core material of the stator and the non-oriented electrical steel sheet that is the core material of the rotor, it is necessary that the {111} <211> orientation strength of the base steel sheet has the above range, and at the same time, A and B which are the respective orientation strengths satisfy a relationship of B/A > 1.0. When A and B are in the relationship of B/A > 1.0, it is possible to achieve both reduction of loss generated in the core of the stator which is easily affected by the magnetic characteristics of the core material and reduction of noise generated in the core of the rotor which is easily affected by the deformation due to the centrifugal force associated with the rotation, and motor characteristics are improved. A and B are in a relationship of preferably B/A > 1.1, and more preferably B/A > 1.2.

On the contrary, when A and B are in a relationship of B/A ≤ 1.0, an electrical steel sheet that is disadvantageous in terms of the deformation with respect to the centrifugal force is applied as the rotor core material, and an electrical steel sheet that is disadvantageous in terms of magnetic characteristics is applied as the stator core material, so that motor loss increases.

Further, in the rotary electric machine according to the present embodiment, the {411} <011> orientation strength (C) of the base steel sheet of the non-oriented electrical steel sheet that is the core material of the stator is in the range of 2 to 50. When the orientation strength (C) is less than 2, the magnetic characteristics are deteriorated, and the motor characteristics are deteriorated. On the other hand, when the {411} <011> orientation strength (C) exceeds 50, manufacturing becomes difficult. The range of the orientation strength (C) is preferably 5 to 30.

In the rotary electric machine according to the present embodiment, the {411 } <011> orientation strength (D) of the base steel sheet of the non-oriented electrical steel sheet that is the core material of the rotor is 1 to 40. When the {411 } <011> orientation strength (D) exceeds 40, the in-plane anisotropy of Young's modulus becomes strong, and noise increases. On the other hand, when the orientation strength (D) is less than 1, heat is easily generated inside the rotor, a permanent magnet is demagnetized, and the characteristics of the motor may be deteriorated. The range of the {411} <011> orientation strength (D) is preferably 3 to 20.

In the rotary electric machine according to the present embodiment, in each of the core material of the stator and the core material of the rotor (non-oriented electrical steel sheets), it is necessary that the base steel sheet has the {411} <011> orientation strength range described above, and at the same time, C and D which are the respective orientation strengths satisfy a relationship of C/D > 1.0. When C and D are in the relationship of C/D > 1.0, it is possible to achieve both improvement of the magnetic characteristics of the core of the stator which is easily affected by the magnetic characteristics of the core material and reduction of noise generated in the core of the rotor which is easily affected by the deformation due to the centrifugal force associated with the rotation. C and D are in a relationship of preferably C/D > 1.1, and further preferably C/D > 1.2.

On the contrary, when C and D are in a relationship of C/D ≤ 1.0, an electrical steel sheet that is disadvantageous in terms of the deformation with respect to the centrifugal force is applied as the rotor core material, and an electrical steel sheet that is disadvantageous in terms of magnetic characteristics is applied as the stator core material, so that motor loss increases.

Here, the orientation strength of the base steel sheets of the core materials (non-oriented electrical steel sheets) of the stator and the rotor will be described. The { 111 } <211> orientation strength and the {411 } <011> orientation strength defined in the present embodiment roughly have a trade-off relationship. For example, as characteristics, the { 111} <211> orientation is an orientation that is not preferable for magnetic characteristics, and the {411} <011> is a preferable orientation for magnetic characteristics. Therefore, in the present embodiment, in the non-oriented electrical steel sheet that is the core material of the stator, control is performed so as to weaken the { 111} <211> orientation strength and at the same time to strengthen the {411} <011> orientation strength.

Also in the metallurgical aspect, in the change in the texture in the steel sheet production step by cold rolling and annealing (recrystallization), for example, according to a change in rolling reduction of cold rolling or a change in annealing temperature, a situation in which an increase in the {111} <211> orientation is accompanied by a decrease in the {411} <011> orientation and a situation in which an increase in the {411} <011> orientation is accompanied by a decrease in the {111} <211> orientation are observed.

From such a background, in the present embodiment, for example, in the non-oriented electrical steel sheet that is the stator core material, as a result of controlling so as to weaken the {111} <211> orientation strength (A) and increase the {411} <011> orientation strength (C) of the base steel sheet, A/C < 1.0 is easily established for the core material of the stator. From the opposite viewpoint, the core material of the stator preferably satisfies A/C < 1.0. It is more preferably A/C < 0.8, and further preferably A/C < 0.6.

Similarly, in the non-oriented electrical steel sheet that is the core material of the rotor, as a result of controlling so as to strengthen the {111} <211> orientation strength (B) and weaken the {411 } <011> orientation strength (D) of the base steel sheet, B/D > 1.0 is easily established for the core material of the rotor. From the opposite viewpoint, the core material of the rotor preferably satisfies B/D > 1.0. It is more preferably B/D > 1.5, and further preferably B/D > 2.0.

However, as will be described just in case, the above "trade-off relationship" does not mean that it is always realized in principle, but means that there is a trade-off relationship in many cases on the premise of the steel sheet production step by cold rolling and annealing (recrystallization) and magnetic characteristics required for electrical steel sheets. That is, for example, a phenomenon in which the { 111 } <211> orientation and the {411} <011> orientation simultaneously increase or decrease is not denied.

When the {111} <211> orientation strengths (A), (B), and the {411} <011> orientation strengths (C), (D) of the base steel sheets of the core material of the stator and the core material of the rotor respectively satisfy the relationship of B/A > 1.0 and the relationship of C/D > 1.0, the reason why the motor noise is reduced is considered to be as follows, for example.

As described above, since the {411} <011> orientation is a preferred orientation for magnetic characteristics, in the conventional electrical steel sheet for a motor, control to increase the strength of this orientation has been performed. However, since this orientation has large in-plane anisotropy of Young's modulus, when an electrical steel sheet having high {411} <011> orientation strength is used as the core material of the rotor, the electrical steel sheet is deformed non-isotropically with respect to a rotating shaft during rotation, and vibration is generated to increase noise.

As in the rotary electric machine according to the present embodiment, the non-oriented electrical steel sheet having high {411} <011> orientation strength is used only as the core material of the stator, and the non-oriented electrical steel sheet having relatively low {411} <011> orientation strength and increased { 111} <211> orientation strength with small in-plane anisotropy of Young's modulus is used as the core material of the rotor. As a result, deformation during rotation is isotropic with respect to the rotating shaft, so that vibration is suppressed to reduce noise.

In the non-oriented electrical steel sheet that is the core material of the rotor of the rotary electric machine according to the present embodiment, it is preferable that the {111} <211> orientation strength (B) and the I 1111 <011> orientation strength (E) further satisfy a relationship of B/E > 1.0.

In the present embodiment, the {411} <011> orientation having large in-plane anisotropy and the { 111 } <211> orientation having small in-plane anisotropy are controlled, but as for the { 111} orientation, the { 111} <011> orientation is likely to develop in addition to the {111} <211> orientation. Considering the overall influence of these orientations on the in-plane anisotropy, regarding the { 111 } orientation, the { 111} <011> orientation having the same in-plane orientation <011> as the {410} <011> orientation is disadvantageous for reducing the overall in-plane anisotropy more than the { 111} <211> orientation. From this viewpoint, in the rotary electric machine according to the present embodiment, B/E > 1.0 is preferably satisfied in the non-oriented electrical steel sheet included in the rotor. It is more preferably B/E > 1.5, and further preferably B/E > 2.0.

In the rotary electric machine according to the present embodiment, in the non-oriented electrical steel sheet that is the core material of the stator, the {411} <011> orientation strength (C) of the base steel sheet and the { 100} <011> orientation strength (F) of the base steel sheet preferably satisfy a relationship of C/F > 1.0.

In the { 100} <011> orientation, the increase margin of the iron loss is high with respect to compressive stress. There are several methods for fixing the stator, but most of them are methods in which compressive stress is applied to the core of the stator. Therefore, it is better to increase {411} <011> having low compressive stress sensitivity. It is more preferably C/F > 1.5, and further preferably C/F > 2.0.

### [Chemical composition]

It is preferable that the chemical compositions of the base steel sheets of the non-oriented electrical steel sheet that is the core material of the stator and the non-oriented electrical steel sheet that is the core material of the rotor of the rotary electric machine according to the present embodiment are the following chemical compositions, respectively, as the core material of the stator and the core material of the rotor that satisfy each orientation strength requirement can be obtained from the manufactured non-oriented electrical steel sheet. "%" in the description of the chemical composition means "mass%".

In the rotary electric machine according to the present embodiment, the non-oriented electrical steel sheet that is the core material of the stator and the non-oriented electrical steel sheet that is the core material of the rotor may have the same chemical composition of the base steel sheet, but may have different chemical compositions as described later.

### (C: 0.0100% or less)

C is an element that increases iron loss or causes magnetic aging. Therefore, the lower the C content, the more preferable. Such a phenomenon is remarkable when the C content is more than 0.0100%. Therefore, the C content is set to 0.0100% or less. The reduction of the C content also contributes to uniform improvement of magnetic characteristics in all directions in the sheet surface. The lower limit of the C content is not particularly limited, but is preferably set to 0.0005% or more in consideration of the cost of decarburization treatment at the time of refining.

### (Si: 0.5000 to 4.0000%)

Si is an element that increases electric resistance, reduces eddy-current loss, reduces iron loss, or increases yield ratio to improve punching workability into a core. When the Si content is less than 0.5000%, these effects cannot be sufficiently obtained. Therefore, the Si content is set to 0.5000% or more. The Si content is preferably 0.9000% or more, and more preferably 1.5000% or more. On the other hand, when the Si content is more than 4.0000%, the magnetic flux density decreases, punching workability decreases or cold rolling becomes difficult due to an excessive increase in hardness. Therefore, the Si content is set to 4.0000% or less.

Also, Si is an element contained in a relatively large amount in the electrical steel sheet, and has a large effect on the I 1111 <211> orientation and the {411} <011> orientation after the cold rolling and the recrystallization annealing mainly controlled in the present embodiment. In low Si steel, the { 111 } <211> orientation is likely to develop, and the {411} <011> orientation is likely to be suppressed.

Therefore, it is preferable that the non-oriented electrical steel sheet used as the core material of the stator has a larger amount of Si in the base steel sheet than the non-oriented electrical steel sheet used as the core material of the rotor. In particular, the presence or absence of transformation due to the Si content in the steel sheet production step can be utilized for the control of the texture, and it is further preferable that the steel sheet used for the core material of the stator has a non-transformational chemical composition of high Si, and the steel sheet used for the core material of the rotor has a transformational chemical composition of low Si.

### (sol.Al: 0.0001 to 1.0000%)

Al is an element that increases electric resistance, reduces eddy-current loss, and reduces iron loss. Al also contributes to improvement of the relative magnitude of the magnetic flux density B50 with respect to the saturation magnetic flux density. When the sol.Al (acid-soluble Al) content is less than 0.0001%, these operation and effects cannot be sufficiently obtained. Al also has an effect of promoting desulfurization in steelmaking. Therefore, the sol.Al content is set to 0.0001% or more. On the other hand, when the sol.Al content is more than 1.0000%, the magnetic flux density decreases, the yield ratio decreases, and the punching workability decreases. Therefore, the sol.Al content is set to 1.0000% or less.

Here, the magnetic flux density B50 is a magnetic flux density in a magnetic field of 5000 A/m.

### (S: 0.0100% or less)

S is not an essential element, and is, for example, an element contained in steel as an impurity. S is precipitated as fine MnS, thereby inhibiting recrystallization and grain growth in annealing. Therefore, the lower the S content, the more preferable. Such increase in iron loss and decrease in magnetic flux density due to the inhibition of recrystallization and grain growth are remarkable when the S content is more than 0.0100%. Therefore, the S content is set to 0.0100% or less. The lower limit of the S content is not particularly limited, but is preferably set to 0.0003% or more in consideration of the cost of desulfurization treatment at the time of refining.

### (N: 0.0100% or less)

Like C, N is an element that deteriorates magnetic characteristics. Therefore, the lower the N content, the more preferable. When the N content is more than 0.0100%, the adverse effect becomes significant, and thus the N content is set to 0.0100% or less. The lower limit of the N content is not particularly limited, but is preferably set to 0.0010% or more in consideration of the cost of denitrification treatment at the time of refining.

### (One or more selected from the group consisting of Mn, Ni, Co, Pt, Pb, Cu, and Au: 0.1000 to 5.0000% in total)

It is necessary to contain at least one or more of elements Mn, Ni, Co, Pt, Pb, Cu, and Au in an amount of 0.1000% or more in total. In addition, the amount of at least one or more of these elements is more preferably set to 0.2000% or more in total from the viewpoint of increasing the electric resistance and decreasing the iron loss. The content is further preferably 1.0000% or more in total.

On the other hand, when the amount of these elements exceeds 5.0000% in total, the cost increases, and the magnetic flux density may decrease. Therefore, the amount of at least one of these elements is set to 5.0000% or less in total. The amount is preferably 4.0000% or less.

### (Cr: 0 to 2.0000%)

Cr is an element that improves corrosion resistance, high frequency characteristics, and texture. Cr does not need to be contained, and the lower limit of the Cr content is 0%. The effect of containing Cr can be obtained even in a trace amount, but in order to reliably obtain the effect of containing Cr, the content is set to preferably 0.0010% or more, more preferably 0.0020% or more, further preferably 0.0200% or more, and still more preferably 0.1000% or more.

On the other hand, when the Cr content is more than 2.0000%, Cr forms a carbonitride, the carbonitride refines grain size, and the iron loss increases. Therefore, the Cr content is set to 2.0000% or less.

### (Sn: 0 to 0.4000%, Sb: 0 to 0.4000%, P: 0 to 0.4000%)

Sn and Sb are elements that improve the texture after cold rolling and recrystallization to improve the magnetic flux density. Therefore, these elements can be contained as necessary. In order to improve magnetic characteristics and the like, it is preferable to contain one or more selected from the group consisting of 0.0200 to 0.4000% of Sn, 0.0200 to 0.4000% of Sb, and 0.0200 to 0.4000% of P.

On the other hand, when Sn and Sb are excessively contained, the steel embrittles. Therefore, the Sn content and the Sb content are both set to 0.4000% or less. In addition, P can be contained in order to ensure the hardness of the steel sheet after recrystallization, but if P is excessively contained, embrittlement of the steel is caused. Therefore, the P content is set to 0.4000% or less.

### (Ti: 0 to 0.1000%, Nb: 0 to 0.1000%)

Ti and Nb are elements that change the texture after cold rolling and recrystallization by fixing and reducing solute C and solute N as precipitates. By containing Ti and Nb, they act to increase the { 111} <211> orientation strength, and lower the {411 } <011> orientation strength. In order to sufficiently obtain this effect, it is preferable to contain Ti and Nb in an amount equal to or more than the equivalent of the C content and the N content, and in general, each of Ti and Nb is contained in an amount of 0.0200% or more, and further preferably 0.0400% or more.

However, the Ti content and the Nb content are both set to 0.1000% or less.

As described above, the { 111} <211> orientation strength increases, and the {411} <011> orientation strength decreases by containing Ti and Nb. Therefore, it is preferable that Ti and Nb are contained more in the non-oriented electrical steel sheet as the core material of the rotor.

However, as described later, when Ti and/or Nb is contained in an amount of 0.0100% or more, sufficient characteristics cannot be obtained unless the temperature rising rate of final annealing is increased to 100°C/sec or more in the case of performing a final annealing process. If the temperature rising rate is not set as described above, the {411 } <011> orientation does not develop, which is not preferable. That is, when Ti and/or Nb is contained, manufacturability is deteriorated. Therefore, from this point of view, the Ti content is preferably less than 0.0100%, and the Nb content is preferably less than 0.0100%. More preferably, the total of the Ti content, the Nb content, and the V content and the Zr content to be described later is less than 0.0100%.

Zr: 0 to 0.1000%
V: 0 to 0.1000%
The chemical composition of the base steel sheet of the non-oriented electrical steel sheet according to the present embodiment may further contain V and/or Zr as an optional element in addition to the above elements.

Zr and V are both elements having an effect of suppressing recrystallization, increasing the {111} <211> orientation strength, and decreasing the {411} <011> orientation strength. In the case of obtaining this effect, each of the Zr content and the V content is preferably 0.0100% or more.

On the other hand, when the Zr content and the V content are more than 0.1000%, the steel becomes brittle. Therefore, both the Zr content and the V content are set to 0.1000% or less. The content is preferably 0.0500% or less, and more preferably less than 0.0100%.

In the rotary electric machine according to the present embodiment, when the Nb content, the Zr content, the Ti content, the V content, the C content, and the N content in mass% of the base steel sheet of the non-oriented electrical steel sheet included in the stator are denoted by Nbₛ, Zrₛ, Tiₛ, Vₛ, Cₛ, and Nₛ, it is preferable to satisfy 0 ≥ Nbₛ/93 + Zrₛ/91 + Tiₛ/48 + Vₛ/51 - (Cₛ/12 + Nₛ/14).

In this case, an effect of increasing the {411} <011> orientation strength can be obtained.

The lower limit value is not particularly limited, but may be, for example, Nbₛ/93 + Zrₛ/91 + Tiₛ/48 + Vₛ/51 - (Cₛ/12 + Nₛ/14) ≥ -1.55 × 10⁻³.

In addition, when the Nb content, the Zr content, the Ti content, the V content, the C content, and the N content in mass% of the base steel sheet of the non-oriented electrical steel sheet included in the rotor are denoted by Nbᵣ, Zrᵣ, Tiᵣ, Vᵣ, Cᵣ, and Nᵣ, respectively, it is preferable to satisfy 0 < Nbᵣ/93 + Zrᵣ/91 + Tiᵣ/48 + Vᵣ/51 - (Cᵣ/12 + Nᵣ/14) < 5.0 × 10⁻³.

In this case, an effect of increasing the { 111} <211> orientation strength can be obtained.

The remainder of the chemical composition other than the above is Fe and impurities. In the present embodiment, the impurity refers to an element that is mixed from a raw material or in the production step and does not clearly affect the characteristics of the rotary electric machine according to the present embodiment.

Examples of the impurities include B, O, Mg, Ca, Nd, Bi, W, Mo, and Y in addition to the above-described elements. The contents of these elements are each preferably, for example, 0.10% or less. In addition, the amount of all impurities is preferably 5.00% or less, and more preferably 1.00% or less in total.

In the rotary electric machine according to the present embodiment, the chemical composition of the base steel sheet of the non-oriented electrical steel sheet included in the stator and the chemical composition of the base steel sheet of the non-oriented electrical steel sheet included in the rotor may be the same, but in consideration of the above effect, when the Si content, the Ti content, and the Nb content in mass% of the base steel sheet of the non-oriented electrical steel sheet included in the stator are respectively denoted by Siₛ, Tiₛ, and Nbₛ, and the Si content, the Ti content, and the Nb content of the base steel sheet of the non-oriented electrical steel sheet included in the rotor are respectively denoted by Siᵣ, Tiᵣ, and Nbᵣ, it is preferable that any one of Siₛ/Siᵣ > 1.0, Tiᵣ/Tiₛ > 1.0, and Nbᵣ/Nbₛ > 1.0 is satisfied.

When any one of Siₛ/Siᵣ > 1.0, Tiᵣ/Tiₛ > 1.0, and Nbᵣ/Nbₛ > 1.0 is satisfied, an effect in which the motor loss is further reduced can be obtained.

In the rotary electric machine according to the present embodiment, difference in a total of the Si content, the Mn content, and the sol.Al content in the base steel sheets between the non-oriented electrical steel sheet included in the stator and the non-oriented electrical steel sheet included in the rotor is preferably within 0.20 mass% (the absolute value of the difference is 0.20 mass% or less). In this case, there is an advantage that work efficiency and cost can be reduced including a case where the stator and the rotor are prepared from the same material.

The chemical composition of the base steel sheet is determined by the following method.

The entire surface of a test material is polished with a grinder or the like, and the test material washed with acetone is cut with a nibbler or the like to prepare a sample. C and S are measured by combustion-infrared absorption method. N is measured by inert gas fusion-thermal conductivity method. Sol.Al is measured by acid dissolution-ICP emission spectrometry. O is measured by inert gas fusion-non-dispersive infrared absorption method. Other elements are measured by ICP emission spectrometry.

Here, the insulating coating on the surface may be removed by machining such as polishing as described above, or may be chemically removed using hot alkali.

In addition, in the case of obtaining the chemical compositions of the base steel sheets of the non-oriented electrical steel sheet included in the stator and the non-oriented electrical steel sheet included in the rotor in the rotary electric machine, the chemical composition may be measured in the manner described above after the non-oriented electrical steel sheet is taken out from the stator or the rotor by disassembling the rotary electric machine.

Although the detailed method of disassembling the rotary electric machine is different according to each actual rotary electric machine, for example, first, the rotary electric machine is taken out from the machine including the rotary electric machine. Thereafter, a part of the housing (case) of the rotary electric machine is removed by machining. Then, the stator and the rotor are separated. When there is a permanent magnet in the rotor at this time, it is desirable to insert a spacer such as a plastic sheet between the stator and the rotor because magnetic attraction force is generated. Thereafter, the stator is removed from the housing.

Since the stator has windings, the windings are removed or partially cut. Excluding a steel sheet at the top of the lamination of the stators or a steel sheet that has been damaged when the winding has been cut, a sample is collected from other places. In many cases, the lamination is fastened by interlocking or welding. In the case of interlocking, it is possible to divide the lamination by, for example, inserting a cutter blade into a gap between the stacked steel sheets. In the case of welding, it is possible to divide the lamination by cutting a welded portion with a hand grinder or the like.

The rotor often has a coil end made of a material other than an electrical steel sheet. Therefore, the rotor is separated into two by machining using a non-magnetic blade near the longitudinal center of the rotor. Thereafter, the lamination is divided in the same manner as the stator described above. At that time, it is desirable to exclude a portion affected by machining.

### [Average grain size of base steel sheet]

In the rotary electric machine according to the present embodiment, the average grain size of the base steel sheet of the non-oriented electrical steel sheet included in the stator is preferably larger than the average grain size of the base steel sheet of the non-oriented electrical steel sheet included in the rotor.

In this case, an effect that the { 111} <211> orientation strength is larger in the rotor and the {411} <011> orientation strength is larger in the stator is obtained.

The average grain size can be determined by the following method.

As the average grain size, an average value of grain sizes measured by a cutting method in the sheet thickness direction and the rolling direction may be used in a longitudinal cross-sectional microstructure photograph. As the longitudinal cross-section microstructure photograph, an optical microscope photograph can be used, and for example, a photograph taken at a magnification of 50 times may be used. In the sheet thickness direction, it is preferable to draw 20 or more line segments corresponding to the total length of the sheet thickness and count grain sizes. In the rolling direction, it is preferable to draw line segments with a length of 2 mm at 1/4, 1/2, and 3/4 of the sheet thickness in parallel and count grain sizes.

However, when a non-recrystallized region is included, only the recrystallized region may be calculated by the above method.

In the rotary electric machine according to the present embodiment, the non-oriented electrical steel sheet included in the stator is preferably a steel sheet obtained by further performing heat treatment at 600°C or higher on the non-oriented electrical steel sheet included in the rotor.

In this case, since the strain introduced by processing is removed, the magnetic characteristics are improved, and the motor characteristics are improved by improving the magnetic characteristics of the stator which is easily affected by the magnetic characteristics of the core material.

### [Thickness of base steel sheet]

Next, the thickness of the base steel sheet of the non-oriented electrical steel sheet according to the present embodiment will be described. The thickness of the base steel sheet of the non-oriented electrical steel sheet according to the present embodiment is not necessarily limited, but is preferably 0.50 mm or less. When the thickness is more than 0.50 mm, it is difficult to obtain excellent high-frequency iron loss. The thickness is preferably 0.35 mm or less, more preferably 0.20 mm or less, and further preferably 0.15 mm or less because it is more advantageous if the sheet thickness is thin from the viewpoint of iron loss.

On the other hand, from the viewpoint of facilitating the manufacture, the thickness of the base steel sheet of the non-oriented electrical steel sheet according to the present embodiment is preferably 0.10 mm or more.

### [Insulating coating]

In the non-oriented electrical steel sheet according to the present embodiment, an insulating coating is formed on a surface of the base steel sheet. This insulating coating may be a known coating. For example, a coating film made of Al₂O₃ is an exemplary example.

### <Laminated core>

The laminated core according to the present embodiment is a laminated core (stator core) formed by laminating the non-oriented electrical steel sheets (the non-oriented electrical steel sheets according to the present embodiment) including a base steel sheet; and an insulating coating formed on a surface of the base steel sheet, the base steel sheet having a chemical composition including, in mass%, C: 0.0100% or less, Si: 0.5000 to 4.0000%, sol.Al: 0.0001 to 1.0000%, S: 0.0100% or less, N: 0.0100% or less, one or more selected from the group consisting of Mn, Ni, Co, Pt, Pb, Cu, and Au: 0.1000 to 5.0000% in total, Cr: 0 to 2.0000%, Sn: 0 to 0.4000%, Sb: 0 to 0.4000%, P: 0 to 0.4000%, Ti: 0 to 0.1000%, Nb: 0 to 0.1000%, Zr: 0 to 0.1000%, V: 0 to 0.1000%, and the remainder of Fe and impurities, and the {111} <211> orientation strength is less than 15, and the {411 } <011> orientation strength is 2 to 50, or a laminated core (rotor core) formed by laminating the non-oriented electrical steel sheets (the non-oriented electrical steel sheets according to the present embodiment) including a base steel sheet; and an insulating coating formed on a surface of the base steel sheet, the base steel sheet having a chemical composition including, in mass%, C: 0.0100% or less, Si: 0.5000 to 4.0000%, sol.Al: 0.0001 to 1.0000%, S: 0.0100% or less, N: 0.0100% or less, one or more selected from the group consisting of Mn, Ni, Co, Pt, Pb, Cu, and Au: 0.1000 to 5.0000% in total, Cr: 0 to 2.0000%, Sn: 0 to 0.4000%, Sb: 0 to 0.4000%, P: 0 to 0.4000%, Ti: 0 to 0.1000%, Nb: 0 to 0.1000%, Zr: 0 to 0.1000%, V: 0 to 0.1000%, and the remainder of Fe and impurities, and the { 111} <211> orientation strength is 2 to 30, and the {411} <011> orientation strength is 1 to 40.

The laminated core is manufactured by punching, laminating, and bonding the non-oriented electrical steel sheets according to the present embodiment. In this step, the chemical composition and the texture are not changed. Therefore, the non-oriented electrical steel sheet included in the laminated core has the same chemical composition and texture as those of the non-oriented electrical steel sheet according to the present embodiment described above.

As can also be seen from this, the chemical composition and texture of the laminated core described above are the chemical composition and texture of the portion that has been the base steel sheet of the non-oriented electrical steel sheet.

Also, a motor core can be formed by combining the stator core and the rotor core.

### [Manufacturing method]

Methods for manufacturing the non-oriented electrical steel sheet according to the present embodiment, the laminated core according to the present embodiment, and the rotary electric machine according to the present embodiment will be described.

### <Method for manufacturing non-oriented electrical steel sheet>

First, as the method for manufacturing the non-oriented electrical steel sheet according to the present embodiment, methods for manufacturing the non-oriented electrical steel sheet that is the core material of the rotor and the non-oriented electrical steel sheet that is the core material of the stator will be described.

A non-oriented electrical steel sheet having predetermined { 111 } <211> orientation strength and {411} <011> orientation strength (the non-oriented electrical steel sheet that is the core material of the rotor and the non-oriented electrical steel sheet that is the core material of the stator are different in ranges of preferred orientation strength) can be obtained by controlling various conditions in the production step.

As a first example, an example of a manufacturing method for separately producing a non-oriented electrical steel sheet preferable as the core material of the stator and a non-oriented electrical steel sheet preferable as the core material of the rotor by using slabs having the same chemical composition and changing manufacturing conditions after hot rolling will be described.

The non-oriented electrical steel sheet according to the present embodiment is manufactured by performing hot rolling and cold rolling, further performing intermediate annealing, skin pass rolling, final annealing, and stress relieving annealing as necessary to manufacture a base steel sheet, and forming an insulating coating on the surface of the base steel sheet after any of the above-described steps.

A non-oriented electrical steel sheet having predetermined { 111} <211> orientation strength and {411} <011> orientation strength can be obtained by controlling various conditions in the production step, and a non-oriented electrical steel sheet preferable as the core material of the stator and a non-oriented electrical steel sheet preferable as the core material of the rotor can be separately produced by whether or not intermediate annealing, skin pass rolling, and final annealing are performed or the like. Here, the intermediate annealing is annealing performed between cold rolling and skin pass rolling, and the final annealing refers to annealing performed after skin pass rolling. This final annealing may be performed by a steel sheet manufacturer or may be performed after core punching by a motor manufacturer (processing manufacturer).

First, a steel material having the above-described chemical composition is heated and hot-rolled. The steel material is, for example, a slab manufactured by normal continuous casting.

The heating temperature of the steel material is not limited, but for example, a standard condition of 1000 to 1350°C can be adopted.

The rough rolling and the finish rolling of the hot rolling are performed at a temperature equal to or higher than Aᵣ₁ temperature. That is, hot rolling is preferably performed such that the temperature at the time of passing through a final pass of finish rolling (finishing temperature) is equal to or higher than the Aᵣ₁ temperature. As a result, the crystal structure is refined by transformation from austenite (gamma iron) to ferrite (alpha iron) by subsequent cooling. When cold rolling is then performed in a state where the crystal structure is refined, bulging recrystallization (a phenomenon in which a recrystallized grain grows so as to bulge to a non-recrystallized portion, hereinafter, may be referred to as "bulging") is likely to occur, and grains of the {411} <011> orientation which are usually difficult to grow can be easily grown. In the non-oriented electrical steel sheet according to the present embodiment, the Aᵣ₁ temperature is determined from a change in thermal expansion of the steel material (base steel sheet) during cooling at an average cooling rate of 1°C/sec after being heated to A_{c3} temperature. Also, in the steel sheet used in the present invention, the A_{c1} temperature (the temperature at which the steel sheet transforms into γ phase) is determined from the change in thermal expansion of the steel material (steel sheet) during heating at an average heating rate of 1°C/sec.

However, when the chemical composition is non-transformational, the finishing temperature is desirably 850°C or higher. This is because when the finishing temperature is lower than 850°C, it is difficult to control the shape of the steel sheet during hot rolling.

Thereafter, the hot-rolled steel sheet is coiled up without performing hot-band annealing. When hot-band annealing is performed, the {411} <011> orientation cannot be enriched in a later step. The temperature at the time of coiling is not limited, but is preferably higher than 250°C and 700°C or lower. By coiling the hot-rolled steel sheet after hot rolling at a temperature higher than 250°C and 700°C or lower, it is possible to obtain the effect that the crystal structure before cold rolling can be refined and the {411} <011> orientation having excellent magnetic characteristics can be enriched at the time of recrystallization. The temperature at the time of coiling is more preferably 400 to 600°C, and further preferably 400 to 480°C.

Thereafter, the hot-rolled steel sheet is subjected to pickling and cold rolling. In the cold rolling, it is preferable to set the rolling reduction to 80.0 to 92.0%. As the rolling reduction is higher, the grains having the {411} <011> orientation are more likely to grow by the subsequent recrystallization.

On the other hand, when the rolling reduction exceeds 92.0%, the load in cold rolling increases, leading to an increase in cost.

The rolling reduction of the cold rolling is determined so as to obtain a necessary product sheet thickness after the skin pass rolling in consideration of the skin pass rolling described later.

After completion of the cold rolling, intermediate annealing is subsequently performed. The intermediate annealing may not be performed. When the intermediate annealing is performed, the recrystallization ratio is set to 1 to 99%, and preferably 50 to 99% by controlling the temperature of intermediate annealing to be lower than the A_{c1} temperature.

If the temperature of intermediate annealing is too low, there is a concern that bulging does not sufficiently occur and grains of the {411} <011> orientation do not sufficiently grow. Therefore, the temperature of intermediate annealing is preferably set to 600°C or higher. In addition, when the temperature of intermediate annealing becomes equal to or higher than the A_{c1} temperature, austenite transformation occurs during annealing, the frequency of occurrence of grains having a crystal orientation other than the {411} <011> orientation increases, and the inventive effect may be impaired. Therefore, the intermediate annealing is performed at a temperature lower than the A_{c1} temperature. When the chemical composition is non-transformational, the intermediate annealing temperature is set to 800°C or lower. The time of such intermediate annealing is preferably 5 to 60 seconds.

The recrystallization ratio is preferably 50% or more at the time point after the intermediate annealing since the {411} <011> orientation grains are more likely to grow after the final annealing or the stress relieving annealing.

The recrystallization ratio of the steel sheet after intermediate annealing (cold-rolled steel sheet to be a base steel sheet of the non-oriented electrical steel sheet) can be specified by the following procedure.

First, a sample collected from the steel sheet is polished from the surface so as to have a sheet thickness of 1/2 (so as to expose the center of the sheet thickness), and the polished surface is observed by an electron back scattering diffraction (EBSD) method. Then, a grain satisfying any one of the following conditions (a) and (b) is determined as a non-recrystallized portion, and the non-recrystallized rate is calculated by the ratio of the area of the non-recrystallized portion to the area of the entire observed visual field.
(a) Grains having a grain size of more than 300 µm.
(b) Grains having an aspect ratio of more than 2, that is, satisfying (length in rolling direction)/(length in 90 degree direction with respect to rolling direction) > 2.

After completion of the intermediate annealing, skin pass rolling is then performed. The skin pass rolling may not be performed. Also, when the intermediate annealing is not performed, the skin pass rolling is performed after the cold rolling. By performing the skin pass rolling, the {111} <211> orientation strength increases, and a non-oriented electrical steel sheet suitable as the core material of the rotor is obtained.

The rolling reduction of the skin pass rolling can be determined in a suitable range on the assumption that a steel sheet obtained by further performing final annealing on a steel sheet subjected to skin pass rolling as described later is used as the core material of the stator. As described above, when the steel sheet in which bulging has occurred is slightly rolled and further annealed, the {411} <011> orientation grains occurred by bulging further grow. This is an example of a phenomenon generally known as strain-induced grain boundary migration (hereinafter, sometimes referred to as SIBM). In order to utilize this phenomenon, the rolling reduction of the skin pass rolling is set to 5 to 25%. When the rolling reduction of the skin pass rolling is less than 5%, the amount of strain accumulated in the steel sheet is small, so that SIBM does not occur. On the other hand, when the rolling reduction of the skin pass rolling is more than 25%, not SIBM but recrystallization nucleation occurs because the strain is too large. In nucleation, the frequency of generation of {111} <211> grains is increased. Thus, if this steel sheet is used as the core material of the stator, the magnetic characteristics of the stator are deteriorated. From the viewpoint of sufficiently obtaining the effect from this viewpoint, the rolling reduction of the skin pass rolling is more preferably set to 5 to 15%.

In addition, when the rolling reduction (%) in the cold rolling is defined as Rm and the rolling reduction (%) in the skin pass rolling is defined as Rs, it is preferable that the rolling reductions in the cold rolling and the skin pass rolling are adjusted so as to satisfy 86 < Rm + 0.2 × Rs < 92 and 5 < Rs < 20.

The steel sheet after the skin pass rolling is subsequently subjected to final annealing. The final annealing may not be performed. When the intermediate annealing or the skin pass rolling is not performed, the final annealing is performed on the steel sheet after the cold rolling or after the intermediate annealing.

In the case of obtaining the effect of final annealing, it is preferable to perform final annealing on the steel sheet after the skin pass rolling. In this case, the strain introduced by the skin pass rolling can be released by the final annealing, and the final annealing can be performed at a temperature and time that occurs recrystallization by the SIBM. The higher the annealing temperature, the shorter the treatment time. However, the α → γ transformation should be avoided, and the upper limit of the temperature is preferably less than the A_{c1} temperature. Specifically, a temperature of 600 to less than A_{c1}°C is an exemplary example, and a time of more than 0 seconds and 100 hours or less is an exemplary example. In the case of a general continuous annealing furnace, 700 to less than A_{c1}°C and 1 to 300 seconds can be exemplified, and in the case of a batch annealing furnace, 600 to less than A_{c1}°C and 20 to 1200 minutes can be exemplified. By appropriately controlling the holding temperature and time, the strain introduced by the skin pass rolling can be sufficiently released by the SIBM, and warpage at the time of punching into a complicated shape can be suppressed. At the same time, grains can be avoided from being too coarse, and a decrease in punching accuracy due to shear drop at the time of punching can be suppressed, that is, workability of the non-oriented electrical steel sheet can be improved.

When the skin pass rolling is not performed, strain can be sufficiently released by final annealing, so that workability is not deteriorated in the first place.

Since the steel sheet after final annealing has high {411 } <011> orientation strength, the steel sheet becomes a non-oriented electrical steel sheet suitable as the core material of the stator.

The temperature rising rate of the final annealing is preferably 30°C/sec or more from the viewpoint of increasing the {411} <011> orientation strength. More preferably, it is 100°C/sec or more, or 200°C/sec or more. The temperature rising rate may be 300°C/sec or more, further 400°C/sec or more, or 500°C/sec or more.

In particular, when the base steel sheet contains 0.010% or more of Ti, Nb, V, or Zr in total, if the temperature rising rate of the final annealing is less than 100°C/sec, the effect of lowering the {411} <011> orientation strength is remarkable, and thus the temperature rising rate is preferably 100°C/sec or more.

In general stress relieving annealing, even if only the stator is subjected to stress relieving annealing, the {411} <011> orientation strength does not increase so much, and the { 111} <011> orientation strength increases. Therefore, it is difficult to satisfy the intended relationship of B/A > 1.0 for the {111} <211> orientation strength (A) of the core material of the stator and the { 111} <211> orientation strength (B) of the core material of the rotor, and the intended relationship of C/D > 1.0 for the {411 } <011> orientation strength (C) of the core material of the stator and the {411 } <011> orientation strength (D) of the core material of the rotor. On the other hand, in the above method utilizing bulging and SIBM, since the {411} <011> orientation grows by encroaching the { 111 } <211> orientation by annealing only the stator, it is very convenient to satisfy the intended relationships of B/A > 1.0 and C/D > 1.0.

When the non-oriented electrical steel sheet according to the present embodiment is formed into a motor core, forming processing or the like (for example, punching) is performed to obtain a desired core member shape. Then, in order to relief strain or the like generated by forming processing or the like, stress relieving annealing may be performed. The final annealing may be performed as stress relieving annealing for the stator core. The temperature of stress relieving annealing is preferably set to about 800°C, for example, and the time of stress relieving annealing is set to preferably about 2 hours.

In the non-oriented electrical steel sheet according to the present embodiment, an insulating coating is formed on the surface of the base steel sheet before or after the stress relieving annealing, after the last step among cold rolling, intermediate annealing, skin pass rolling, and final annealing. As the conditions for forming the insulating coating, the same conditions as those for forming the insulating coating of the conventional non-oriented electrical steel sheet may be adopted.

As another example of separate production of the non-oriented electrical steel sheet that is the core material of the rotor and the non-oriented electrical steel sheet that is the core material of the stator, there is a method of performing hot rolling, cold rolling, intermediate annealing, and skin pass rolling on slabs having the same chemical composition under the same conditions (as the same sheet), and then separately producing depending on whether or not final annealing or stress relieving annealing is performed. In this method, a steel sheet subjected to the skin pass step is manufactured and shipped by a steel sheet manufacturer, and then a core material of a rotor and a core material of a stator are punched out from the same steel sheet (generally referred to as integrated punching or the like) by a motor manufacturer (processing manufacturer), the rotor core is used without performing stress relieving annealing, and the stator core is used after performing stress relieving annealing, whereby the rotary electric machine of the present invention can be manufactured. Since the core material of the rotor and the core material of the stator are separately produced by stress relieving annealing, which is the final stage of manufacturing the motor core, it is convenient in terms of distribution, steel sheet arrangement, and yield, and it can be said that it is a very preferable method from the industrial viewpoint.

That is, for example, the non-oriented electrical steel sheet included in the stator may be a steel sheet obtained by further performing heat treatment (final annealing or stress relieving annealing) at 600°C or higher on the non-oriented electrical steel sheet included in the rotor.

As described above, a core material applicable to the rotary electric machine according to the present embodiment can be obtained.

The non-oriented electrical steel sheet that is the core material of the rotor and the non-oriented electrical steel sheet that is the core material of the stator of the rotary electric machine according to the present embodiment may be separately produced by a method other than the above. For example, they may be manufactured by using steel materials having different chemical compositions, or also can be separately produced according to hot rolling conditions, cold rolling conditions, and the like.

For the conditions not described above, known conditions can be appropriately adopted.

The electrical steel sheet manufactured (non-oriented electrical steel sheet) as described above is an electrical steel sheet suitable as the core material of the stator or the core material of the rotor of the rotary electric machine according to the present embodiment. Basically, a steel sheet manufactured so as to suppress integration in the {111} <211> orientation and promote integration in the {411} <011> orientation is an electrical steel sheet suitable as the core material of the stator, and a steel sheet manufactured so as to promote integration in the {111} <211> orientation is an electrical steel sheet suitable as the core material of the rotor. Furthermore, when the core of the motor is subjected to stress relieving annealing, a steel sheet in which a change in crystal orientation due to the stress relieving annealing is also taken into consideration can be applied. Then, the rotary electric machine according to the present embodiment can be obtained by selecting and using a steel sheet such that the orientation strengths (A), (B), (C), (D), (E), and (F) of the respective core materials satisfy a predetermined relationship.

It is necessary to consider that a method of using two types of steel sheets each having a texture separately produced by chemical compositions, hot rolling conditions, hot band heat treatment conditions, cold rolling conditions, final annealing conditions, or the like as the core material of the stator or the core material of the rotor is disadvantageous in terms of steel sheet yield as compared with the method of punching the core material of the stator and the core material of the rotor from one type of steel sheet described above in that it is not so-called integrated punching. However, since the texture of each steel sheet can be completely independently controlled, it is also advantageous in terms of the magnitude of the effect if the steel sheet is appropriately selected.

### <Method for manufacturing laminated core>

Among the non-oriented electrical steel sheets according to the present embodiment described above, the laminated core according to the present embodiment is manufactured using a non-oriented electrical steel sheet in which the {111} <211> orientation strength is less than 15 and the {411} <011> orientation strength is 2 to 50 as a material of a stator core, or a non-oriented electrical steel sheet in which the {111} <211> orientation strength is 2 to 30 and the {411} <011> orientation strength is 1 to 40 as a material of a rotor core.

Specifically, different non-oriented electrical steel sheets for the stator and for the rotor are prepared, and each steel sheet is processed by punching, and laminated. Alternatively, the same electrical steel sheet may be used for the stator and the rotor, processed by punching, and laminated, and stress relief annealing may be performed only for the stator. Punching and lamination may be performed by known methods.

### <Method for manufacturing rotary electric machine>

The rotary electric machine according to the present embodiment is manufactured by manufacturing the laminated core, winding the laminated core by a known method, and assembling by housing in a housing. At this time, the order of winding and housing in a housing may be reversed.

### [Examples]

Hereinafter, embodiments of the present invention will be further described with reference to examples.

Conditions used in the examples are examples of conditions for confirmation, and the present invention is not limited to these examples, and various conditions can be adopted without departing from the present invention as long as the object of the present invention is achieved.

### (Manufacture of electrical steel sheet)

Molten steel was cast to prepare ingots, hot rolling, pickling, and cold rolling were performed, and for some examples, one or more steps of intermediate annealing, skin pass rolling, and final annealing were further performed and thereby electrical steel sheets (non-oriented electrical steel sheets) are prepared. The chemical compositions of each kind of steel of the obtained electrical steel sheets and the transformation temperatures of the steel sheets are shown in Table 1. Among the chemical compositions, the contents of impurities not specified in the table were each 0.0010% or less, and 0.10% or less in total. Aᵣ₁ (°C) represents a temperature at which transformation to α phase occurs, and A_{c1} (°C) represents a temperature at which transformation to γ phase occurs. The chemical composition that does not undergo α-γ transformation (non-transformational) was described as "-" in the column of phase transformation point temperature. Also, the column of formula¹⁾ in the table shows calculation results of Nb/93 + Zr/91 + Ti/48 + V/51 - (C/12 + N/14) using contents of Nb, Zr, Ti, V, C, and N in mass%.

Further, various manufacturing conditions are shown in Table 2-1 and Table 2-2.

Furthermore, an insulating coating made of known Al₂O₃ was formed on the surface of the electrical steel sheet obtained by the above method. The thickness of the insulating coating was set to 0.5 µm.

The final thickness in Table 2 is the thickness of the base steel sheet after the step in Table 2 is completed.

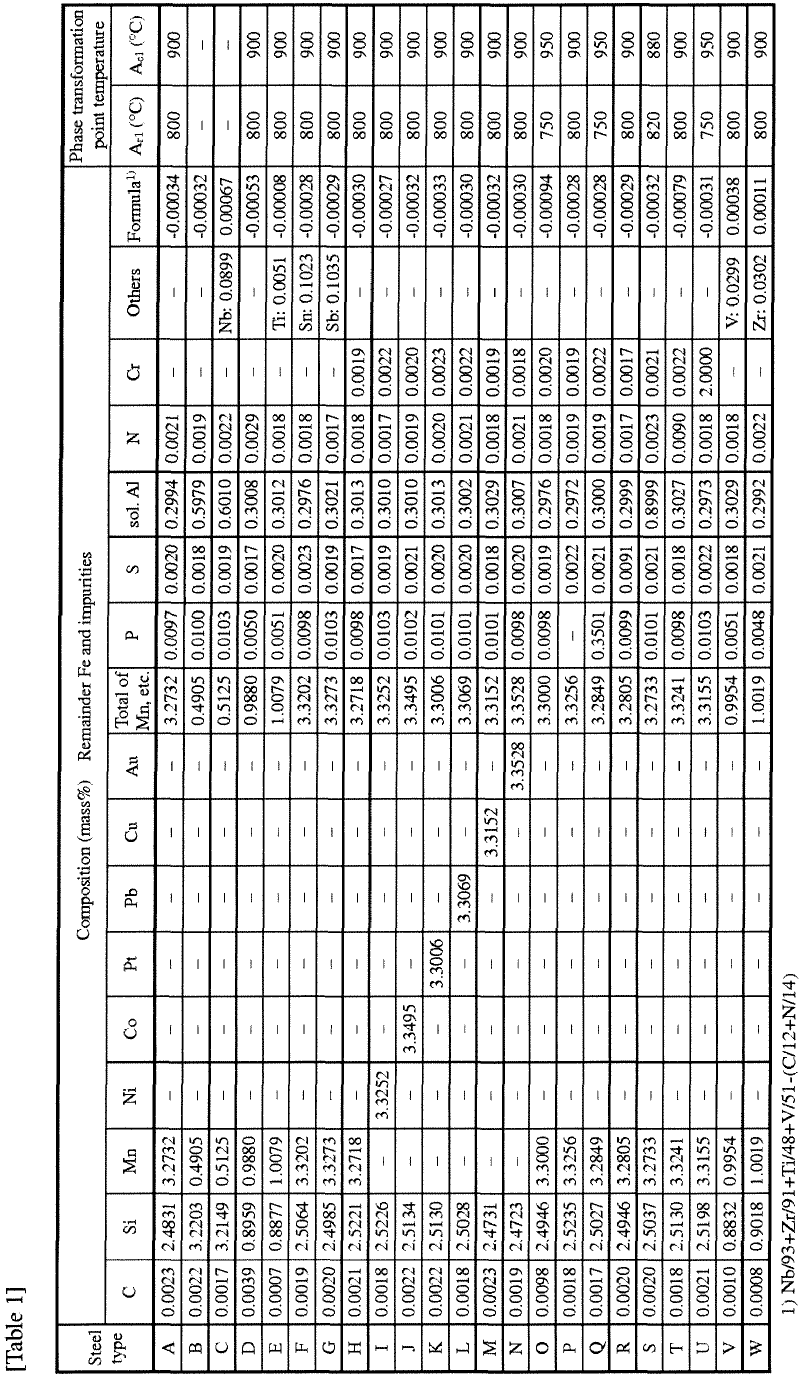

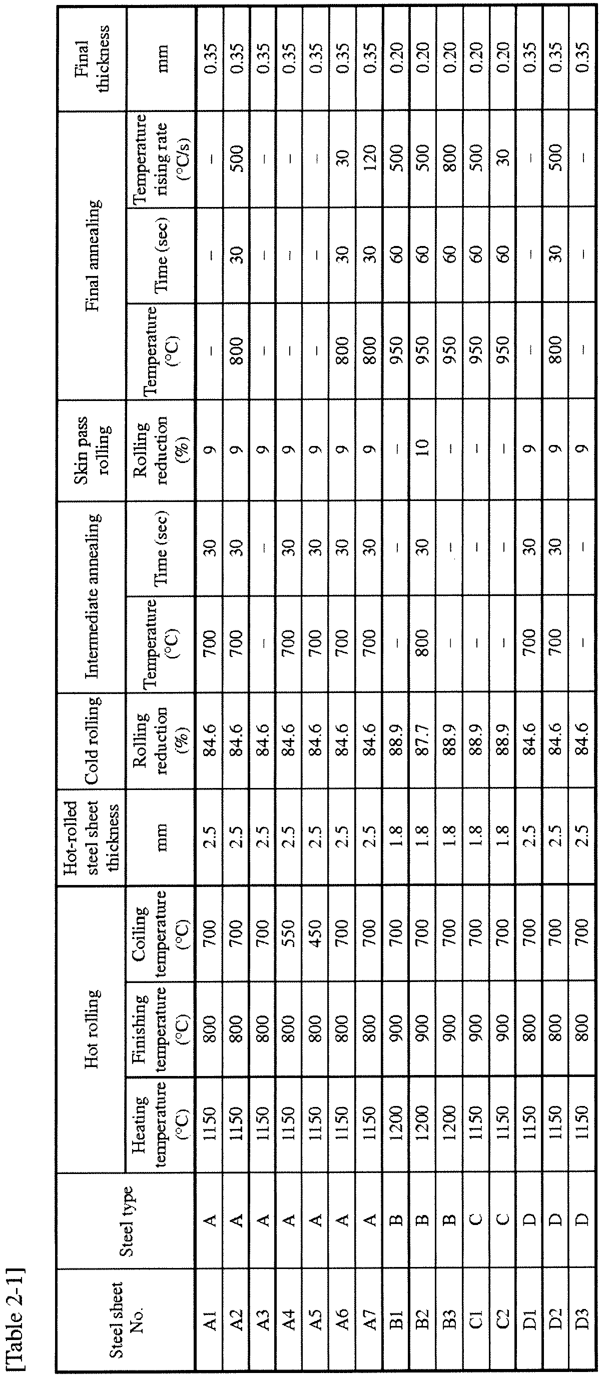

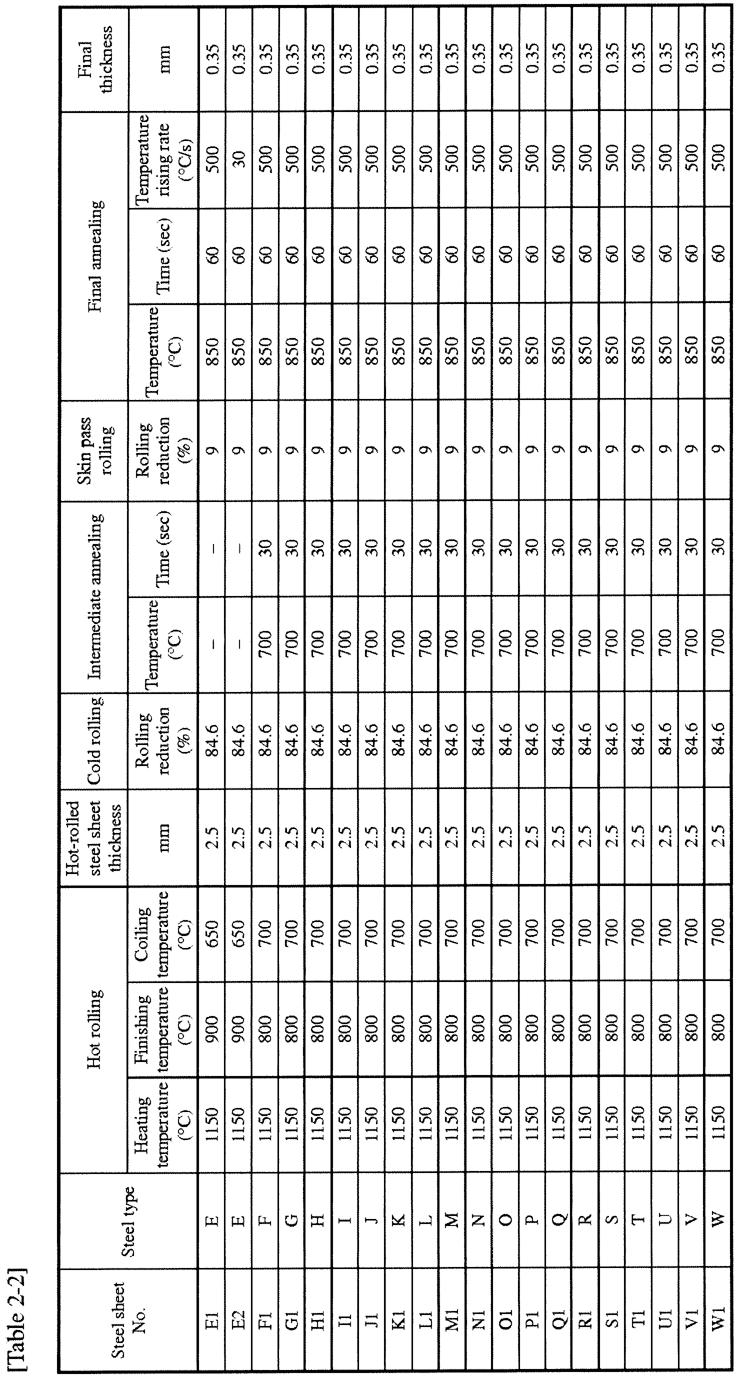

### (Manufacture and evaluation of motor)

Next, using the obtained electrical steel sheet, a stator core and a rotor core used for the motor for evaluation were manufactured. At that time, as shown in Tables 3-1 to 3-4, some cores were subjected to stress relieving annealing at 800°C for 2 hours. Then, these cores were combined to manufacture a motor for evaluation, and motor loss and noise were measured.

### (Motor for evaluation)

FIG. 1 is a partial plan view of a motor. A motor 300 is an IPM motor prepared based on the Institute of Electrical Engineers of Japan D-model. The outer diameter of a stator core 3 is 112 mm (= 54 mm + 0.5 mm × 2 + 28.5 mm × 2), the outer diameter of a rotor 302 is 54 mm, and the stack height of the stator core 3 is 100 mm. The number of slots is 24. The stator core 3 is fixed to a housing 301 by shrink fitting. The inner diameter of the stator core 3 is 55 mmϕ, and the gap between the rotor 302 and the stator core 3 is 0.5 mm. The stator core has 24 slots, the number of windings per phase of a copper wire wound around a teeth of the stator core is 35 turns, and magnetic flux density Br of a rotor magnet is 1.25 T.

### (Motor loss)

### (Noise)

In the present example, loss (motor loss (W)) and noise generated in the motor when a winding current with a peak value of 3A was passed at a phase angle of 30 degrees and the motor was driven at a rotation speed of 1500 RPM for 60 minutes were obtained.

The power (W) required under the above operating conditions and the work (W) done by the motor were obtained, and the loss of the motor was obtained by power - work. The power was measured using a power meter. As the work, a torque meter was attached at the tip of the motor, and the work was obtained from torque × rotation speed. Noise measurement was performed in an anechoic chamber with a background noise of 16 dBA with a noise meter installed at a position of 0.3 m from the core surface using an A-weighted network.

With respect to noise, noise during operation of the motors of Test Nos. 1, 16, 21, 31, 33, 35, 37, 39, 41, 43, 45, 47, 49, 51, 53, 55, 57, 59, and 61 was used as references, and differences from references using the same kind of steels were evaluated.

The orientation strength of the core material of each core is shown in Tables 3-1 to 3-8 together with motor loss and noise (relative values). The orientation strength shown here is a measured value for a core material after stress relieving annealing when the core is formed and then subjected to the stress relieving annealing.

**[Table 3-1]**

| Test No. | Core | Material steel sheet No. | Whether any one of Siₛ/Siᵣ>1.0, Tiᵣ/Tiₛ>1.0, Nbᵣ/Nbₛ>1.0 is satisfied | Stress relieving annealing | | Difference in total amount of Si, Mn, sol.Al (mass%) | Average grain size (µm) | Orientation strength of core material of rotor or stator | | | | | |
|---|---|---|---|---|---|---|---|---|---|---|---|---|---|
| | | | | Temperature (°C) | Time (hr) | | | A | B | C | D | E | F |
| 1 | Stator | A1 | Not satisfied | 800 | 1 | 0.00 | 80 | 1 | - | 20 | - | - | 10 |
| | Rotor | A1 | | 800 | 2 | | 80 | - | 1 | - | 20 | 1 | - |
| 2 | Stator | A1 | Not satisfied | 800 | 2 | 0.00 | 80 | 1 | - | 20 | - | - | 10 |
| | Rotor | A1 | | - | - | | 15 | - | 16 | - | 16 | 4 | - |
| 3 | Stator | A1 | Not satisfied | 800 | 2 | 0.00 | 80 | 1 | - | 20 | - | - | 10 |
| | Rotor | A2 | | - | - | | 70 | - | 14 | - | 17 | 4 | - |
| 4 | Stator | A2 | Not satisfied | 800 | 2 | 0.00 | 85 | 1 | - | 21 | - | - | 32 |
| | Rotor | A1 | | - | - | | 15 | - | 16 | - | 16 | 4 | - |
| 5 | Stator | A2 | Not satisfied | 800 | 2 | 0.00 | 85 | 1 | - | 21 | - | - | 32 |
| | Rotor | A2 | | - | - | | 70 | - | 14 | - | 17 | 4 | - |
| 6 | Stator | A1 | Not satisfied | 800 | 2 | 0.00 | 80 | 1 | - | 20 | - | - | 10 |
| | Rotor | A3 | | - | - | | 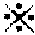 2 | - | 4 | - | 16 | 16 | - |
| 7 | Stator | A2 | Not satisfied | 800 | 2 | 0.00 | 70 | 1 | - | 21 | - | - | 22 |
| | Rotor | A3 | | - | - | | 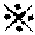 2 | - | 4 | - | 16 | 16 | - |
| 8 | Stator | A1 | Not satisfied | - | - | 0.00 | 15 | 16 | - | 16 | - | - | 32 |
| | Rotor | A1 | | 800 | 2 | | 80 | - | 1 | - | 21 | 1 | - |
| 9 | Stator | A2 | Not satisfied | - | - | 0.00 | 70 | 14 | - | 17 | - | - | 30 |
| | Rotor | A1 | | 800 | 2 | | 80 | - | 1 | - | 21 | 1 | - |
| 10 | Stator | A4 | Not satisfied | 800 | 2 | 0.00 | 81 | 1.2 | - | 23 | - | - | 20 |
| | Rotor | A4 | | - | - | | 16 | - | 14 | - | 16 | 4 | - |
| 11 | Stator | A5 | Not satisfied | 800 | 2 | 0.00 | 83 | 1.1 | - | 14 | - | - | 10 |
| | Rotor | A5 | | - | - | | 17 | - | 16 | - | 10 | 4 | - |
| 12 | Stator | A4 | Not satisfied | 800 | 2 | 0.00 | 81 | 1.2 | - | 23 | - | - | 20 |
| | Rotor | A5 | | 800 | 2 | | 82 | - | 1.1 | - | 14 | 4 | - |
| 14 | Stator | A5 | Not satisfied | 800 | 2 | 0.00 | 82 | 1.1 | - | 14 | - | - | 20 |
| | Rotor | A4 | | 800 | 2 | | 81 | - | 1.2 | - | 23 | 4 | - |
| is | Stator | A6 | Not satisfied | 800 | 2 | 0.00 | 82 | 1 | - | 14 | - | - | 10 |
| | Rotor | A6 | | - | - | | 72 | - | 16 | - | 10 | 4 | - |
| 16 | Stator | B1 | Not satisfied | 800 | 2 | 0.00 | 90 | 8 | - | 0.4 | - | - | 2 |
| | Rotor | B1 | | 800 | 2 | | 90 | - | 8 | - | 0.4 | 2 | - |

| | | | | | | | | | | | | | |
|---|---|---|---|---|---|---|---|---|---|---|---|---|---|
| 2 Texture is processed as it is cold rolled | | | | | | | | | | | | | |

**[Table 3-2]**

| Test No. | Core | Material steel sheet No. | Whether any one of Siₛ/Siᵣ>1.0, Tiᵣ/Tiₛ>1.0, Nbᵣ/Nbₛ>1.0 is satisfied | Stress relieving annealing | | Difference in total amount of Si, Mn, sol.Al (mass%) | Average grain size (µm) | Orientation strength of core material of rotor or stator | | | | | |
|---|---|---|---|---|---|---|---|---|---|---|---|---|---|
| | | | | Temperature (°C) | Time (hr) | | | A | B | C | D | E | F |
| 17 | Stator | B2 | Not satisfied | 800 | 2 | 0.00 | 91 | 7 | - | 2 | - | - | 2 |
| | Rotor | B1 | | 800 | 2 | | 90 | - | 8 | - | 1 | 2 | - |
| 18 | Stator | B3 | Not satisfied | 800 | 2 | 0.00 | 89 | 7 | - | 2 | - | - | 2 |
| | Rotor | B1 | | 800 | 2 | | 90 | - | 8 | - | 1 | 2 | - |
| 19 | Stator | B1 | Satisfied | 800 | 2 | 0.02 | 90 | 8 | - | 2 | - | - | 2 |
| | Rotor | C1 | | 800 | 2 | | 20 | - | 12 | - | 1 | 7 | - |
| 20 | Stator | B1 | Satisfied | 800 | 2 | 0.02 | 90 | 8 | - | 2 | - | - | 2 |
| | Rotor | C2 | | 800 | 2 | | 20 | - | 32 | - | 0.4 | 7 | - |
| 21 | Stator | D1 | Not satisfied | 800 | 2 | 0.00 | 81 | 1 | - | 17 | - | - | 8 |
| | Rotor | D1 | | 800 | 2 | | 81 | - | 1 | - | 17 | 3 | - |
| 22 | Stator | D1 | Not satisfied | 800 | 2 | 0.00 | 81 | 1 | - | 17 | - | - | 8 |
| | Rotor | D1 | | - | - | | 21 | - | 12 | - | 12 | 5 | - |
| 23 | Stator | D2 | Not satisfied | 800 | 2 | 0.00 | 80 | 1 | - | 16 | - | - | 8 |
| | Rotor | D2 | | - | - | | 70 | - | 12 | - | 11 | 7 | - |
| 24 | Stator | D1 | Not satisfied | 800 | 2 | 0.00 | 81 | 1 | - | 17 | - | - | 8 |
| | Rotor | D3 | | - | - | | 2 | - | 8 | - | 14 | 2 | - |
| 25 | Stator | D2 | Not satisfied | 800 | 2 | 0.00 | 80 | 1 | - | 16 | - | - | 8 |
| | Rotor | D3 | | - | - | | 2 | - | 8 | - | 14 | 2 | - |
| 26 | Stator | D1 | Satisfied | 800 | 2 | 0.01 | 81 | 1 | - | 17 | - | - | 8 |
| | Rotor | E1 | | - | - | | 20 | - | 16 | - | 15 | 3 | - |
| 27 | Stator | D1 | Satisfied | 800 | 2 | 0.01 | 81 | 1 | - | 17 | - | - | 8 |
| | Rotor | E2 | | - | - | | 20 | - | 32 | - | 0.4 | 3 | - |
| 28 | Stator | A1 | Satisfied | 800 | 2 | 3.87 | 80 | 1 | - | 20 | - | - | 10 |
| | Rotor | D1 | | - | - | | 21 | - | 12 | - | 12 | 5 | - |
| 29 | Stator | A1 | Satisfied | 800 | 2 | 3.87 | 80 | 1 | - | 20 | - | - | 10 |
| | Rotor | VI | | - | - | | 21 | - | 12 | - | 12 | 5 | - |
| 30 | Stator | A1 | Satisfied | 800 | 2 | 3.85 | 80 | 1 | - | 20 | - | - | 10 |
| | Rotor | W1 | | - | - | | 21 | - | 12 | - | 12 | 5 | - |
| 31 | Stator | F1 | Not satisfied | 800 | 2 | 0.00 | 80 | 1 | - | 20 | - | - | 10 |
| | Rotor | F1 | | 800 | 2 | | 80 | - | 1 | - | 20 | 1 | - |

| | | | | | | | | | | | | | |
|---|---|---|---|---|---|---|---|---|---|---|---|---|---|
| 2 Texture is processed as it is cold rolled | | | | | | | | | | | | | |

**[Table 3-3]**

| Test No. | Core | Material steel sheet No. | Whether any one of Siₛ/Siᵣ>1.0, Tiᵣ/Tiₛ>1.0, Nbᵣ/Nbₛ>1.0 is satisfied | Stress relieving annealing | | Difference in total amount of Si, Mn, sol.Al (mass%) | Average grain size (µm) | Orientation strength of core material of rotor or stator | | | | | |
|---|---|---|---|---|---|---|---|---|---|---|---|---|---|
| | | | | Temperature (°C) | Time (hr) | | | A | B | C | D | E | F |
| 32 | Stator | Fl | Not satisfied | 800 | 2 | 0.00 | 80 | 1 | - | 20 | - | ' - | 10 |
| | Rotor | Fl | | - | - | | 71 | - | is | - | 16 | 5 | - |
| 33 | Stator | G1 | Not satisfied | 800 | 2 | 0.00 | 83 | 1 | - | 20 | - | - | 10 |
| | Rotor | G1 | | 800 | 2 | | 83 | - | 1 | - | 20 | 1 | - |
| 34 | Stator | G1 | Not satisfied | 800 | 2 | 0.00 | 83 | 1 | - | 20 | - | - | 10 |
| | Rotor | G1 | | - | - | | 69 | - | 15 | - | 16 | 5 | - |
| 35 | Stator | H1 | Not satisfied | 800 | 2 | 0.00 | 82 | 1 | - | 20 | - | - | 10 |
| | Rotor | H1 | | 800 | 2 | | 82 | - | 1 | - | 20 | 1 | - |
| 36 | Stator | H1 | Not satisfied | 800 | 2 | 0.00 | 82 | 1 | - | 20 | - | - | 10 |
| | Rotor | H1 | | - | - | | 72 | - | 16 | - | 16 | 4 | - |
| 37 | Stator | I1 | Not satisfied | 800 | 2 | 0.00 | 79 | 1 | - | 20 | - | - | 10 |
| | Rotor | I1 | | 800 | 2 | | 79 | - | 1 | - | 20 | 1 | - |
| 38 | Stator | 11 | Not satisfied | 800 | 2 | 0.00 | 79 | 1 | - | 20 | - | - | 10 |
| | Rotor | I1 | | - | - | | 68 | - | 16 | - | 16 | 4 | - |
| 39 | Stator | J1 | Not satisfied | 800 | 2 | 0.00 | 80 | 1 | - | 20 | - | - | 10 |
| | Rotor | J1 | | 800 | 2 | | 80 | - | 1 | - | 20 | 1 | - |
| 40 | Stator | J1 | Not satisfied | 800 | 2 | 0.00 | 80 | 1 | - | 20 | - | - | 10 |
| | Rotor | J1 | | - | - | | 71 | - | 16 | - | 16 | 4 | - |
| 41 | Stator | K1 | Not satisfied | 800 | 2 | 0.00 | 83 | 1 | - | 20 | - | - | 10 |
| | Rotor | K1 | | 800 | 2 | | 83 | - | 1 | - | 20 | 1 | - |
| 42 | Stator | K1 | Not satisfied | 800 | 2 | 0.00 | 83 | 1 | - | 20 | - | - | 10 |
| | Rotor | K1 | | - | - | | 70 | - | 16 | - | 16 | 4 | - |
| 43 | Stator | L1 | Not satisfied | 800 | 2 | 0.00 | 80 | 1 | - | 20 | - | - | 10 |
| | Rotor | L1 | | 800 | 2 | | 80 | - | 1 | - | 20 | 1 | - |
| 44 | Stator | L1 | Not satisfied | 800 | 2 | 0.00 | 80 | 1 | - | 20 | - | - | 10 |
| | Rotor | L1 | | - | - | | 69 | - | 16 | - | 16 | 4 | - |
| 45 | Stator | M1 | Not satisfied | 800 | 2 | 0.00 | 81 | 1 | - | 20 | - | - | 10 |
| | Rotor | M1 | | 800 | 2 | | 81 | - | 1 | - | 20 | 1 | - |
| 46 | Stator | M1 | Not satisfied | 800 | 2 | 0.00 | 81 | 1 | - | 20 | - | - | 10 |
| | Rotor | M1 | | - | - | | 72 | - | 16 | - | 16 | 4 | - |

**[Table 3-4]**

| Test No. | Core | Material steel sheet No. | Whether any one of Siₛ/Siᵣ>1.0, Tiᵣ/Tiₛ>1.0, Nbᵣ/Nbₛ>1.0 is satisfied | Stress relieving annealing | | Difference in total amount of Si, Mn, sol.Al (mass%) | Average grain size (µm) | Orientation strength of core material of rotor or stator | | | | | |
|---|---|---|---|---|---|---|---|---|---|---|---|---|---|
| | | | | Temperature (°C) | Time (hr) | | | A | B | C | D | E | F |
| 47 | Stator | N1 | Not satisfied | 800 | 2 | 0.00 | 80 | 1 | - | 20 | - | - | 10 |
| | Rotor | N1 | | 800 | 2 | | 80 | - | 1 | - | 20 | 1 | - |
| 48 | Stator | N1 | Not satisfied | 800 | 2 | 0.00 | 80 | 1 | - | 20 | - | - | 10 |
| | Rotor | N1 | | - | - | | 71 | - | 16 | - | 16 | 4 | - |
| 49 | Stator | O1 | Not satisfied | 800 | 2 | 0.00 | 80 | 1 | - | 20 | - | - | 10 |
| | Rotor | O1 | | 800 | 2 | | 80 | - | 1 | - | 20 | 1 | - |
| 50 | Stator | C1 | Not satisfied | 800 | 2 | 0.00 | 80 | 1 | - | 20 | - | ' - | 10 |
| | Rotor | O1 | | - | - | | 72 | - | 16 | - | 16 | 4 | - |
| 51 | Stator | P1 | Not satisfied | 800 | 2 | 0.00 | 78 | 1 | - | 20 | - | - | 10 |
| | Rotor | P1 | | 800 | 2 | | 78 | - | 1 | - | 20 | 1 | - |
| 52 | Stator | P1 | Not satisfied | 800 | 2 | 0.00 | 78 | 1 | - | 20 | - | - | 10 |
| | Rotor | P1 | | - | - | | 67 | - | 16 | - | 16 | 4 | - |
| 53 | Stator | Q1 | Not satisfied | 800 | 2 | 0.00 | 79 | 1 | - | 20 | - | - | 10 |
| | Rotor | Q1 | | 800 | 2 | | 79 | - | 1 | - | 20 | 1 | - |
| 54 | Stator | Q1 | Not satisfied | 800 | 2 | 0.00 | 79 | 1 | - | 20 | - | - | 10 |
| | Rotor | Q1 | | - | - | | 70 | - | 16 | - | 16 | 4 | - |
| 55 | Stator | R1 | Not satisfied | 800 | 2 | 0.00 | 80 | 1 | - | 20 | - | - | 10 |
| | Rotor | R1 | | 800 | 2 | | 80 | - | 1 | - | 20 | 1 | - |
| 56 | Stator | R1 | Not satisfied | 800 | 2 | 0.00 | 80 | 1 | - | 20 | - | - | 10 |
| | Rotor | R1 | | - | - | | 69 | - | 16 | - | 16 | 4 | - |
| 57 | Stator | S1 | Not satisfied | 800 | 2 | 0.00 | 81 | 1 | - | 20 | - | - | 10 |
| | Rotor | S1 | | 800 | 2 | | 81 | - | 1 | - | 20 | 1 | - |
| 58 | Stator | S1 | Not satisfied | 800 | 2 | 0.00 | 81 | 1 | - | 20 | - | - | 10 |
| | Rotor | S1 | | - | - | | 68 | - | 16 | | 16 | 4 | - |
| 59 | Stator | T1 | Not satisfied | 800 | 2 | 0.00 | 82 | 1 | - | 20 | - | - | 10 |
| | Rotor | T1 | | 800 | 2 | | 82 | - | 1 | - | 20 | 1 | - |
| 60 | Stator | T1 | Not satisfied | 800 | 2 | 0.00 | 82 | 1 | - | 20 | - | - | 10 |
| | Rotor | T1 | | - | - | | 70 | - | 16 | - | 16 | 4 | - |
| 61 | Stator | U1 | Not satisfied | 800 | 2 | 0.00 | 80 | 1 | - | 20 | - | - | 10 |
| | Rotor | U1 | | 800 | 2 | | 80 | - | 1 | - | 20 | 1 | - |
| 62 | Stator | U1 | Not satisfied | 800 | 2 | 0.00 | 80 | 1 | - | 20 | - | - | 10 |
| | Rotor | U1 | | - | - | | 71 | - | 16 | - | 16 | 4 | - |

**[Table 3-5]**

| Test No. | Relational expression of orientation strength | | | | Relational expression of orientation strength | | | |
|---|---|---|---|---|---|---|---|---|
| | B/A | C/D | B/E | C/F | B/A>1.0 | C/D>1.0 | B/E>1.0 | C/F>1.0 |
| 1 | 1.0 | 1.0 | 1.0 | 2.0 | Not satisfied | Not satisfied | Not satisfied | Satisfied |
| 2 | 16.0 | 1.3 | 4.0 | 2.0 | Satisfied | Satisfied | Satisfied | Satisfied |
| 3 | 14.0 | 1.2 | 3.5 | 2.0 | Satisfied | Satisfied | Satisfied | Satisfied |
| 4 | 16.0 | 1.3 | 4.0 | 0.7 | Satisfied | Satisfied | Satisfied | Not satisfied |
| 5 | 14.0 | 1.2 | 3.5 | 0.7 | Satisfied | Satisfied | Satisfied | Not satisfied |
| 6 | 4.0 | 1.3 | 0.3 | 2.0 | Satisfied | Satisfied | Not satisfied | Satisfied |
| 7 | 4.0 | 1.3 | 0.3 | 1.0 | Satisfied | Satisfied | Not satisfied | Not satisfied |
| 8 | 0.1 | 0.8 | 1.0 | 0.5 | Not satisfied | Not satisfied | Not satisfied | Not satisfied |
| 9 | 0.1 | 0.8 | 1.0 | 0.6 | Not satisfied | Not satisfied | Not satisfied | Not satisfied |
| 10 | 11.7 | 1.4 | 3.5 | 1.2 | Satisfied | Satisfied | Satisfied | Satisfied |
| 11 | 14.5 | 1.4 | 4.0 | 1.4 | Satisfied | Satisfied | Satisfied | Satisfied |
| 12 | 0.9 | 1.6 | 0.3 | 1.2 | Not satisfied | Satisfied | Not satisfied | Satisfied |
| 14 | 1.1 | 0.6 | 0.3 | 0.7 | Satisfied | Not satisfied | Not satisfied | Not satisfied |
| 15 | 16.0 | 1.4 | 4.0 | 1.4 | Satisfied | Satisfied | Satisfied | Satisfied |
| 16 | 1.0 | 1.0 | 4.0 | 0.2 | Not satisfied | Not satisfied | Satisfied | Not satisfied |
| 17 | 1.1 | 2.0 | 4.0 | 1.0 | Satisfied | Satisfied | Satisfied | Not satisfied |
| 18 | 1.1 | 2.0 | 4.0 | 1.0 | Satisfied | Satisfied | Satisfied | Not satisfied |
| 19 | 1.5 | 2.0 | 1.7 | 1.0 | Satisfied | Satisfied | Satisfied | Not satisfied |
| 20 | 4.0 | 5.0 | 4.6 | 1.0 | Satisfied | Satisfied | Satisfied | Not satisfied |
| 21 | 1.0 | 1.0 | 0.3 | 2.1 | Not satisfied | Not satisfied | Not satisfied | Satisfied |
| 22 | 12.0 | 1.4 | 2.4 | 2.1 | Satisfied | Satisfied | Satisfied | Satisfied |
| 23 | 12.0 | 1.5 | 1.7 | 2.0 | Satisfied | Satisfied | Satisfied | Satisfied |
| 24 | 8.0 | 1.2 | 4.0 | 2.1 | Satisfied | Satisfied | Satisfied | Satisfied |
| 25 | 8.0 | 1.1 | 4.0 | 2.0 | Satisfied | Satisfied | Satisfied | Satisfied |
| 26 | 16.0 | 1.1 | 5.3 | 2.1 | Satisfied | Satisfied | Satisfied | Satisfied |
| 27 | 32.0 | 42.5 | 10.7 | 2.1 | Satisfied | Satisfied | Satisfied | Satisfied |
| 28 | 12.0 | 1.7 | 2.4 | 2.0 | Satisfied | Satisfied | Satisfied | Satisfied |
| 29 | 12.0 | 1.7 | 2.4 | 2.0 | Satisfied | Satisfied | Satisfied | Satisfied |
| 30 | 12.0 | 1.7 | 2.4 | 2.0 | Satisfied | Satisfied | Satisfied | Satisfied |
| 31 | 1.0 | 1.0 | 1.0 | 2.0 | Not satisfied | Not satisfied | Not satisfied | Satisfied |
| 32 | 15.0 | 1.3 | 3.0 | 2.0 | Satisfied | Satisfied | Satisfied | Satisfied |

**[Table 3-6]**

| Test No. | Relational expression of orientation strength | | | | Relational expression of orientation strength | | | |
|---|---|---|---|---|---|---|---|---|
| | B/A | C/D | B/E | C/F | B/A>1.0 | C/D>1.0 | B/E>1.0 | C/F>1.0 |
| 33 | 1.0 | 1.0 | 1.0 | 2.0 | Not satisfied | Not satisfied | Not satisfied | Satisfied |
| 34 | 15.0 | 1.3 | 3.0 | 2.0 | Satisfied | Satisfied | Satisfied | Satisfied |
| 35 | 1.0 | 1.0 | 1.0 | 2.0 | Not satisfied | Not satisfied | Not satisfied | Satisfied |
| 36 | 16.0 | 1.3 | 4.0 | 2.0 | Satisfied | Satisfied | Satisfied | Satisfied |
| 37 | 1.0 | 1.0 | 1.0 | 2.0 | Not satisfied | Not satisfied | Not satisfied | Satisfied |
| 38 | 16.0 | 1.3 | 4.0 | 2.0 | Satisfied | Satisfied | Satisfied | Satisfied |
| 39 | 1.0 | 1.0 | 1.0 | 2.0 | Not satisfied | Not satisfied | Not satisfied | Satisfied |
| 40 | 16.0 | 1.3 | 4.0 | 2.0 | Satisfied | Satisfied | Satisfied | Satisfied |
| 41 | 1.0 | 1.0 | 1.0 | 2.0 | Not satisfied | Not satisfied | Not satisfied | Satisfied |
| 42 | 16.0 | 1.3 | 4.0 | 2.0 | Satisfied | Satisfied | Satisfied | Satisfied |
| 43 | 1.0 | 1.0 | 1.0 | 2.0 | Not satisfied | Not satisfied | Not satisfied | Satisfied |
| 44 | 16.0 | 1.3 | 4.0 | 2.0 | Satisfied | Satisfied | Satisfied | Satisfied |
| 45 | 1.0 | 1.0 | 1.0 | 2.0 | Not satisfied | Not satisfied | Not satisfied | Satisfied |
| 46 | 16.0 | 1.3 | 4.0 | 2.0 | Satisfied | Satisfied | Satisfied | Satisfied |
| 47 | 1.0 | 1.0 | 1.0 | 2.0 | Not satisfied | Not satisfied | Not satisfied | Satisfied |
| 48 | 16.0 | 1.3 | 4.0 | 2.0 | Satisfied | Satisfied | Satisfied | Satisfied |
| 49 | 1.0 | 1.0 | 1.0 | 2.0 | Not satisfied | Not satisfied | Not satisfied | Satisfied |
| 50 | 16.0 | 1.3 | 4.0 | 2.0 | Satisfied | Satisfied | Satisfied | Satisfied |
| 51 | 1.0 | 1.0 | 1.0 | 2.0 | Not satisfied | Not satisfied | Not satisfied | Satisfied |
| 52 | 16.0 | 1.3 | 4.0 | 2.0 | Satisfied | Satisfied | Satisfied | Satisfied |
| 53 | 1.0 | 1.0 | 1.0 | 2.0 | Not satisfied | Not satisfied | Not satisfied | Satisfied |
| 54 | 16.0 | 1.3 | 4.0 | 2.0 | Satisfied | Satisfied | Satisfied | Satisfied |
| 55 | 1.0 | 1.0 | 1.0 | 2.0 | Not satisfied | Not satisfied | Not satisfied | Satisfied |
| 56 | 16.0 | 1.3 | 4.0 | 2.0 | Satisfied | Satisfied | Satisfied | Satisfied |
| 57 | 1.0 | 1.0 | 1.0 | 2.0 | Not satisfied | Not satisfied | Not satisfied | Satisfied |
| 58 | 16.0 | 1.3 | 4.0 | 2.0 | Satisfied | Satisfied | Satisfied | Satisfied |
| 59 | 1.0 | 1.0 | 1.0 | 2.0 | Not satisfied | Not satisfied | Not satisfied | Satisfied |
| 60 | 16.0 | 1.3 | 4.0 | 2.0 | Satisfied | Satisfied | Satisfied | Satisfied |
| 61 | 1.0 | 1.0 | 1.0 | 2.0 | Not satisfied | Not satisfied | Not satisfied | Satisfied |
| 62 | 16.0 | 1.3 | 4.0 | 2.0 | Satisfied | Satisfied | Satisfied | Satisfied |

**[Table 3-7]**

| Test No. | Motor loss (W) | Noise (dB) | Determination |
|---|---|---|---|
| 1 | 45 | Reference A | Comparative Example |
| 2 | 42 | -3 | Invention Example |
| 3 | 42 | -3 | Invention Example |
| 4 | 43 | -3 | Invention Example |
| 5 | 43 | -3 | Invention Example |
| 6 | 43 | -2 | Invention Example |
| 7 | 43 | -2 | Invention Example |
| 8 | 49 | +2 | Comparative Example |
| 9 | 49 | +2 | Comparative Example |
| 10 | 42 | -3 | Invention Example |
| 11 | 40 | -3 | Invention Example |
| 12 | 49 | +2 | Comparative Example |
| 14 | 49 | +2 | Comparative Example |
| 15 | 42 | -3 | Invention Example |
| 16 | 50 | Reference B | Comparative Example |
| 17 | 49 | -3 | Invention Example |
| 18 | 49 | -3 | Invention Example |
| 19 | 49 | -5 | Invention Example |
| 20 | 60 | +2 | Comparative Example |
| 21 | 61 | Reference D | Comparative Example |
| 22 | 59 | -3 | Invention Example |
| 23 | 59 | -3 | Invention Example |
| 24 | 60 | -2 | Invention Example |
| 25 | 60 | -2 | Invention Example |
| 26 | 60 | -2 | Invention Example |
| 27 | 71 | +2 | Comparative Example |
| 28 | 44 | -3 | Invention Example |
| 29 | 44 | -3 | Invention Example |
| 30 | 44 | -3 | Invention Example |
| 31 | 45 | Reference F | Comparative Example |
| 32 | 42 | -3 | Invention Example |

**[Table 3-8]**

| Test No. | Motor loss (W) | Noise (dB) | Determination |
|---|---|---|---|
| 33 | 45 | Reference G | Comparative Example |
| 34 | 42 | -3 | Invention Example |
| 35 | 44 | Reference H | Comparative Example |
| 36 | 40 | -3 | Invention Example |
| 37 | 43 | Reference I | Comparative Example |
| 38 | 41 | -3 | Invention Example |
| 39 | 44 | Reference J | Comparative Example |
| 40 | 42 | -2 | Invention Example |
| 41 | 45 | Reference K | Comparative Example |
| 42 | 40 | -3 | Invention Example |
| 43 | 43 | Reference L | Comparative Example |
| 44 | 42 | -3 | Invention Example |
| 45 | 43 | Reference M | Comparative Example |
| 46 | 42 | -2 | Invention Example |
| 47 | 44 | Reference N | Comparative Example |
| 48 | 41 | -2 | Invention Example |
| 49 | 43 | Reference O | Comparative Example |
| 50 | 40 | -3 | Invention Example |
| 51 | 44 | Reference P | Comparative Example |
| 52 | 42 | -3 | Invention Example |
| 53 | 45 | Reference Q | Comparative Example |
| 54 | 42 | -3 | Invention Example |
| 55 | 44 | Reference R | Comparative Example |
| 56 | 42 | -2 | Invention Example |
| 57 | 43 | Reference S | Comparative Example |
| 58 | 41 | -2 | Invention Example |
| 59 | 45 | Reference T | Comparative Example |
| 60 | 42 | -3 | Invention Example |
| 61 | 44 | Reference U | Comparative Example |
| 62 | 40 | -3 | Invention Example |

The effect of the present invention is evaluated by a relative value with respect to motor loss and noise in a motor in which the core material of the stator and the core material of the rotor are made of the same steel sheet. In the motor in which the core material of the stator and the core material of the rotor are made of different steel sheets, a case where motor loss and noise are smaller than those of the motor made of the same steel sheet (steel sheets having the same kind of steel and manufacturing conditions) is an invention example.

Test Nos. 1, 16, 21, 31, 33, 35, 37, 39, 41, 43, 45, 47,49, 51, 53, 55, 57, 59, and 61 in Tables 3-1 to 3-8 are examples in which the core materials of the stator and the rotor are of the same kind of steel and steel sheets having the same stress relieving annealing conditions are used, and these are defined as Comparative Example (Reference A), Comparative Example (Reference B), Comparative Example (Reference D), Comparative Example (Reference F), Comparative Example (Reference G), Comparative Example (Reference H), Comparative Example (Reference I), Comparative Example (Reference J), Comparative Example (Reference K), Comparative Example (Reference L), Comparative Example (Reference M), Comparative Example (Reference N), Comparative Example (Reference O), Comparative Example (Reference P), Comparative Example (Reference Q), Comparative Example (Reference R), Comparative Example (Reference S), Comparative Example (Reference T), and Comparative Example (Reference U), respectively.

Test Nos. 1 to 15 are examples using steel type A described in Table 1. It can be seen that the motor loss and noise of Nos. 2 to 7, 10, 11, and 15 as invention examples are both lower than those of Comparative Example (Reference A) as a reference.

Test Nos. 16 to 18 are examples using component B described in Table 1. No. 17 as an invention example and No. 18 as an invention example are examples in which the {111} <211> orientation strength of the core material of the stator is weakened and the {411} <011> orientation strength is increased by change in the cold rolling reduction in No. 17 and change in the temperature rising rate in No. 18.

Also, Test No. 19 is an example in which a steel sheet in which the {111} <211> orientation strength is increased by containing Nb is applied as the core material of the rotor.

It can be seen that the motor loss and noise of Invention Examples 17 to 19 are both lower than those of Test No. 16 (Comparative Example (Reference B)) as a reference.

Test Nos. 21 to 25 are examples using component D described in Table 1. It can be seen that the motor loss and noise of Nos. 22 to 25 as invention examples are both lower than those of Test No. 21 (Comparative Example (Reference D)) as a reference.

In Test No. 26, a steel sheet material is a combination of a stator (Dl) and a rotor (El). A steel sheet in which the {111} <211> orientation strength is increased by containing Ti is applied as the core material of the rotor, and the motor loss and noise are both lower than those in Test No. 21 (Comparative Example (Reference D)).

Invention Examples Nos. 28, 29, and 30 are combinations of a rotor (D1), a rotor (V1), or a rotor (W1) with respect to a stator (Al). In these examples, a transformational material (low Si steel) is applied to the core material of the rotor to increase the {111} <211> orientation strength, and the motor loss and noise are both lower than those in Test No. 21 (Comparative Example (Reference D)).

Test Nos. 31 to 32 are examples using steel type F described in Table 1. It can be seen that the motor loss and noise of Test No. 32 as an invention example are both lower than those of Test No. 31 (Comparative Example (Reference F)) as a reference.

Test Nos. 33 to 34 are examples using steel type G described in Table 1. It can be seen that the motor loss and noise of Test No. 34 as an invention example are both lower than those of No. 33 (Comparative Example (Reference G)) as a reference.

Similarly, Test Nos. 36 to 62 are examples using steel types H to U described in Table 1.

It can be seen that the motor loss and noise of Test Nos. 36, 38, 40, 42, 44, 46, 48, 50, 52, 54, 56, 58, 60, and 62 are both lower than those of Test Nos. 35, 37, 39, 41, 43, 45, 47, 49, 51, 53, 55, 57, 59, and 61, which are references using similar kind of steels, respectively.

On the other hand, in Test Nos. 8, 9, 12, 14, 20, and 27, the predetermined orientation strength was not obtained, and the motor loss and the noise were inferior to the references.

The rotary electric machine according to the present invention has excellent characteristics in motor loss and noise by applying different steel sheets having appropriately controlled chemical composition, hot rolling conditions, cold rolling conditions, and annealing conditions, respectively, as the core material of the stator and the core material of the rotor.

### [Field of Industrial Application]

According to the present invention, it is possible to provide a rotary electric machine excellent in motor loss and noise, and thus it is industrially extremely useful.

### [Brief Description of the Reference Symbols]

3 Stator core
300 Motor
301 Housing
302 Rotor

## Claims

1. A rotary electric machine comprising:
a stator;
a rotor; and
a housing that houses the stator and the rotor, wherein
A which is an { 111 } <211> orientation strength of a base steel sheet of a non-oriented electrical steel sheet included in the stator is less than 15, B which is an {111} <211> orientation strength of a base steel sheet of a non-oriented electrical steel sheet included in the rotor is 2 to 30, and the A and the B satisfy a relationship of B/A > 1.0,
C which is an {411} <011> orientation strength of the base steel sheet of the non-oriented electrical steel sheet included in the stator is 2 to 50, D which is an {411} <011> orientation strength of the base steel sheet of the non-oriented electrical steel sheet included in the rotor is 1 to 40, and the C and the D satisfy a relationship of C/D > 1.0, and
the base steel sheets of the non-oriented electrical steel sheet included in the rotor and the non-oriented electrical steel sheet included in the stator each having a chemical composition including,
in mass%,
C: 0.0100% or less,
Si: 0.5000 to 4.0000%,
sol.Al: 0.0001 to 1.0000%,
S: 0.0100% or less,
N: 0.0100% or less,
one or more selected from the group consisting of Mn, Ni, Co, Pt, Pb, Cu, and Au: 0.1000 to 5.0000% in total,
Cr: 0 to 2.0000%,
Sn: 0 to 0.4000%,
Sb: 0 to 0.4000%,
P: 0 to 0.4000%,
Ti: 0 to 0.1000%,
Nb: 0 to 0.1000%,
Zr: 0 to 0.1000%,
V: 0 to 0.1000%, and
the remainder of Fe and impurities.

2. The rotary electric machine according to claim 1, wherein
in the non-oriented electrical steel sheet included in the rotor, the B and E which is an {111} <011> orientation strength satisfy a relationship of B/E > 1.0.

3. The rotary electric machine according to claim 1, wherein
in the non-oriented electrical steel sheet included in the stator, the C and F which is an { 100} <011> orientation strength satisfy a relationship of C/F > 1.0.

4. The rotary electric machine according to any one of claims 1 to 3, wherein
difference in a total of the Si content, the Mn content, and the sol.Al content in the base steel sheets between the non-oriented electrical steel sheet included in the stator and the non-oriented electrical steel sheet included in the rotor is within 0.20 mass%, and
an average grain size of the non-oriented electrical steel sheet included in the stator is larger than an average grain size of the non-oriented electrical steel sheet included in the rotor.

5. The rotary electric machine according to any one of claims 1 to 3, wherein
when the Si content, the Ti content, and the Nb content in mass% of the base steel sheet of the non-oriented electrical steel sheet included in the stator are respectively denoted by Sis, Tiₛ, and Nbs, and the Si content, the Ti content, and the Nb content of the base steel sheet of the non-oriented electrical steel sheet included in the rotor are respectively denoted by Siᵣ, Tiᵣ, and Nbᵣ,
any one of Siₛ/Siᵣ > 1.0, Tiᵣ/Tiₛ > 1.0, and Nbᵣ/Nbₛ > 1.0 is satisfied.

6. The rotary electric machine according to any one of claims 1 to 3, wherein
when the Nb content, the Zr content, the Ti content, the V content, the C content, and the N content in mass% of the base steel sheet of the non-oriented electrical steel sheet included in the stator are respectively denoted by Nbₛ, Zrₛ, Tiₛ, Vₛ, Cₛ, and Nₛ,
0 ≥ Nbₛ/93 + Zrₛ/91 + Tiₛ/48 + Vₛ/51 - (Cₛ/12 + Nₛ/14) is satisfied.

7. The rotary electric machine according to any one of claims 1 to 3, wherein
when the Nb content, the Zr content, the Ti content, the V content, the C content, and the N content in mass% of the base steel sheet of the non-oriented electrical steel sheet included in the rotor are respectively denoted by Nbᵣ, Zrᵣ, Tiᵣ, Vᵣ, Cᵣ, and Nᵣ,
0 < Nbᵣ/93 + Zrᵣ/91 + Tiᵣ/48 + Vᵣ/51 - (Cᵣ/12+Nᵣ/14) < 5.0 × 10⁻³ is satisfied.

8. A non-oriented electrical steel sheet comprising:
a base steel sheet; and
an insulating coating formed on a surface of the base steel sheet,
the base steel sheet having a chemical composition including,
in mass%,
C: 0.0100% or less,
Si: 0.5000 to 4.0000%,
sol.Al: 0.0001 to 1.0000%,
S: 0.0100% or less,
N: 0.0100% or less,
one or more selected from the group consisting of Mn, Ni, Co, Pt, Pb, Cu, and Au: 0.1000 to 5.0000% in total,
Cr: 0 to 2.0000%,
Sn: 0 to 0.4000%,
Sb: 0 to 0.4000%,
P: 0 to 0.4000%,
Ti: 0 to 0.1000%,
Nb: 0 to 0.1000%,
Zr: 0 to 0.1000%,
V: 0 to 0.1000%, and
the remainder of Fe and impurities, and
in the base steel sheet,
an {111} <211> orientation strength being less than 15, and
an {411 } <011> orientation strength being 2 to 50.

9. A non-oriented electrical steel sheet comprising:
a base steel sheet; and
an insulating coating formed on a surface of the base steel sheet,
the base steel sheet having a chemical composition including,
in mass%,
C: 0.0100% or less,
Si: 0.5000 to 4.0000%,
sol.Al: 0.0001 to 1.0000%,
S: 0.0100% or less,
N: 0.0100% or less,
one or more selected from the group consisting of Mn, Ni, Co, Pt, Pb, Cu, and Au: 0.1000 to 5.0000% in total,
Cr: 0 to 2.0000%,
Sn: 0 to 0.4000%,
Sb: 0 to 0.4000%,
P: 0 to 0.4000%,
Ti: 0 to 0.1000%,
Nb: 0 to 0.1000%,
Zr: 0 to 0.1000%,
V: 0 to 0.1000%, and
the remainder of Fe and impurities, and
in the base steel sheet,
an {111} <211> orientation strength being 2 to 30, and
an {411} <011> orientation strength being 1 to 40.

10. A laminated core,
wherein the non-oriented electrical steel sheets according to claim 8 are laminated.

11. A laminated core,
wherein the non-oriented electrical steel sheets according to claim 9 are laminated.

12. The rotary electric machine according to any one of claims 1 to 3, wherein
the non-oriented electrical steel sheet included in the stator is a steel sheet obtained by further performing heat treatment at 600°C or higher on the non-oriented electrical steel sheet included in the rotor.

13. A method for manufacturing a laminated core, comprising:
a step of processing and laminating the non-oriented electrical steel sheets according to claim 8.

14. A method for manufacturing a laminated core, comprising:
a step of processing and laminating the non-oriented electrical steel sheets according to claim 9.

15. A method for manufacturing a rotary electric machine, comprising:
a step of assembling the laminated core according to claim 10 and the laminated core according to claim 11.
